# EUROPEAN PATENT APPLICATION

(11) **EP 3 683 685 A1**
(43) Date of publication of application: **22.07.2020**
(21) Application number: 20163004.3
(22) Date of filing: 19.09.2016
(51) Int. Cl.: G06F 12/02, G06F 21/53, G06F 21/79, G06F 21/56, G06F 21/54

(54) **USING ASSURED CALLING SEQUENCES IN MICRO-SANDBOXES**

(30) Priority: 17.09.2015 US 201562219852 P; 03.05.2016 US 201615144993
(62) Divisional of application: 16847541.6
(71) Applicant: Onsystem Logic, LLC, Baltimore, Maryland 21228 (US)
(72) Inventor: TAJALLI, Homayoon, Ellicott City, MD Maryland 21043 (US); GRAHAM, Jeffrey J., Olney, MD Maryland 20832 (US)
(74) Representative: Poskett, Oliver James

(57) **Abstract**

The present disclosure relates to methods, systems, and devices that use assured calling sequences to validate proper application behavior. Validating calling sequences ensures that attackers have not modified the process' stack to gain control of the execution path for critical operations. The validation may involve mapping calling sequence addresses to modules or functions present in the process. Additionally, some embodiments relate to eliminating unnecessary code from various modules and controlling which modules can be loaded into a program.

## Description

### BACKGROUND

### Background

In computing, so-called "sandboxes" are a means by which various running programs or modules are accorded different kinds of access to resources and different privileges based on the requirements of the system and of the programs or modules. One of the things for which sandboxes can be used is to enforce the principle of least privilege (i.e., the concept that each program or module has only the minimum privileges necessary to perform its required functions, and no more). Typical sandbox-based systems enforce least privilege at a very coarse level, i.e. at a user or process level. At their most granular, the sandboxes in sandbox-based systems enforce least privilege at the module level. Thus, if a single function in a module requires a privilege, then sandbox grants the entire module that privilege. This gives a potential attacker a large attack surface within the process to attempt to subvert into invoking a privileged operation. As long as the process has permission to perform the operation, it is permitted from anywhere within the process. Or at best, the operation is permitted from anywhere within one specific module in the process. New security solutions-solutions that reduce the attack surface in a program and thus dramatically increase the difficulty of creating successful attacks-are needed.

### SUMMARY

According to various embodiments of the disclosure methods, systems, and devices that use assured calling sequence to validate proper application behavior are provided. Additionally, some embodiments relate to eliminating unnecessary code from various modules and controlling which modules can be loaded into a program.

In some embodiments a method of mapping an address to a memory region in a process is provided. According to the method, an address to be mapped is received. It is determined that a module corresponding to the address to be mapped is present in the module list and that address is then converted to a relative address within the identified module. Mapping information for the address to be mapped is then returned.

According to some embodiments, a memory mapping system is provided. The memory mapping system may include a memory and one or more processors coupled to the memory. The one or more processors can be configured to receive an address to be mapped. The processors can then be configured to determine that a module corresponding to the address to be mapped is present in the module list and that address is then converted to a relative address within the identified module. The one or more processors are also configured to return mapping information for the address to be mapped.

A non-transitory computer-readable medium storing computer executable code that, when executed by one or more processors, causes the processors to perform various steps is also provided according to some embodiments. The computer executable code may include instructions for receiving an address to be mapped. Additionally, the instructions may include instructions for determining that a module corresponding to the address to be mapped is present in a module list. The instructions may cause the converting of address to be mapped to a relative address within the identified module; and returning mapping information for the address to be mapped.

Some embodiments provide that the mapping information may comprise at least one of a module name, a module version number, a function name, a relative, address, and an assured calling sequence value. Additionally in some embodiments, determining that the module corresponding to the address is present in the module list is accomplished by comparing the address to be mapped to begin and end addresses in a module list. Additionally, the address to be mapped can be compared to begin and end addresses of a plurality of modules in the module list according to the index values of each of the plurality of modules. In cases where an identified module list containing a plurality of functions, it can also be determined which function of the plurality of functions in the function list corresponds to the address to be mapped by, for instance, comparing the address to be mapped to begin and end addresses associated with each of the plurality of functions and determining that the address to be mapped falls between the begin and end address associated with one of the functions. The address to be mapped may be based on a calling sequence associated with known memory regions of the process according to some embodiments.

### BRIEF DESCRIPTION OF THE DRAWINGS

The accompanying drawings are incorporated herein and form a part of the specification.
Figure 1 is a functional block diagram of a system for using assured calling sequences in micro-sandboxes, according embodiments of the disclosure.
Figure 2 is a functional block diagram of an endpoint component, according to embodiments of the disclosure.
Figure 3 is a functional block diagram of an endpoint component, according to embodiments of the disclosure.
Figure 4 is a functional depiction of the data used by the endpoint component to map addresses to known memory regions in a process, according to embodiments of the disclosure.
Figures 5A and 5B are a flowchart illustrating a process for mapping an address from to a memory region in a process, according to embodiments of the disclosure.
Figure 6 is a functional depiction of the data used by the endpoint component to store a micro-sandbox definition, according to embodiments of the disclosure.
Figure 7 is a flowchart illustrating a process for matching the caller and intercepted function to micro-sandbox rules, according to embodiments of the disclosure.
Figure 8 is a functional depiction of an intercepted function call, according to embodiments of the disclosure.
Figure 9 is a block diagram of a system that includes a single public cloud component gathering data from all sources into a single database, according to embodiments of the disclosure.
Figure 10 is a block diagram of a system that includes 3 separate private clouds, according to embodiments of the disclosure.
Figure 11 is a block diagram of a managed service system where the managed services provider operates cloud and management components for two separate organizations, according to embodiments of the disclosure.
Figure 12 is a functional block diagram of a cloud component, according to embodiments of the disclosure.
Figure 13 is a functional block diagram of a management component, according to embodiments of the disclosure.
Figure 14 is a flowchart depicting a method of updating micro-sandbox definitions and creating new micro-sandbox definitions according to various embodiments.
Figure 15 is a functional block diagram of mechanisms for distributing new or updated micro-sandbox definitions, according to embodiments of the disclosure.
Figures 16A and 16B are a depiction of the data in a calling sequence as it is transformed by the endpoint component, according to embodiments of the disclosure.
Figure 17 is a flowchart depicting a method of creating a converted calling sequence from an original calling sequence, according to embodiments of the disclosure.
Figures 18A and 18B are a depiction of a function call that is intercepted at two control points along its calling sequence, according to embodiments of the disclosure.
Figure 19 is a flowchart depicting a method of sharing data between two control points in a single calling sequence, according to embodiments of the disclosure.
Figure 20 is a depiction of the data in a micro-sandbox rule that allows dynamic definition of ACSs, according to embodiments of the disclosure.
Figure 21 is a flowchart depicting a method of the logic for enforcing a micro-sandbox rule with a dynamic ACS list, according to embodiments of the disclosure.
Figure 22 is a depiction of a module as it appears on disk and in memory after being modified to reduce its attack surface, according to embodiments of the disclosure.
Figure 23 is an example computer system useful for implementing various embodiments of the disclosure.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, method and/or computer program product embodiments, and/or combinations and sub-combinations thereof, for using micro-sandboxes for the purposes of stopping memory attacks.

One embodiment of the system consists of one or more endpoint components and the micro-sandbox definitions. Another embodiment of the system consists of one or more endpoint components, a cloud component, and the micro-sandbox definitions. Another embodiment of the system consists of one or more endpoint components, a management component, and the micro-sandbox definitions. Another embodiment of the system consists of one or more endpoint components, a management component, a cloud component and the micro-sandbox definitions. Other embodiments are possible.

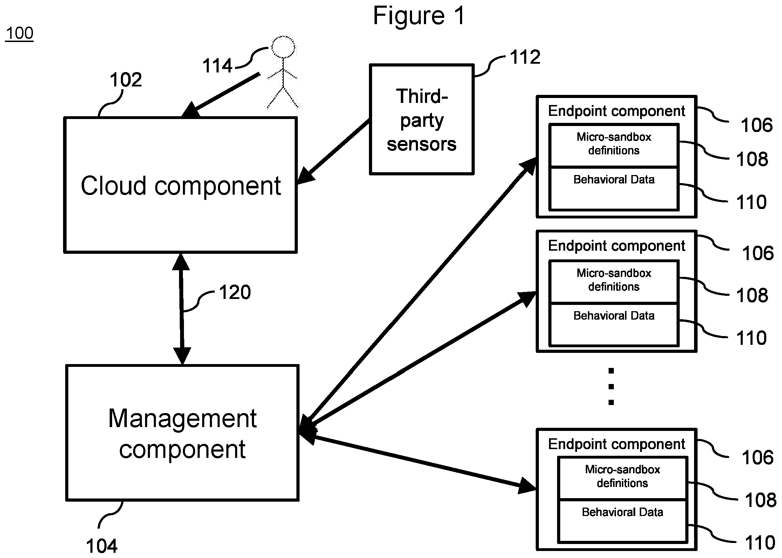

Figure 1 is a functional block diagram of a system 100 according to embodiments of the disclosure. System 100 includes a cloud component 102, a management component 104, one or more endpoint components 106, and third party sensors 112.

As shown in FIG. 1, cloud component 102 is communicatively coupled to management component 104 via standard internet protocols 120, e.g. TCP or UDP sockets. Cloud component 102 is preferably configured to receive behavioral data 110 from a variety of sources, e.g. from the several endpoint components 106 via management component 104, and to transmit micro-sandbox definitions 108 to a variety of destinations, e.g. to the several endpoint components 106 via management component 104.

According to various embodiments, management component 104 is responsible for managing the one or more of the endpoint components 106. For instance, management component 104 may accept micro-sandbox definitions 108 from cloud component 102 and transmit them on to the endpoint components 106. Each of the endpoint components 106 may also contain micro-sandbox definitions 108 and behavioral data 110. Third party sensors 112 may also provide input to system 100.

The cloud component 102 may also accept behavioral data from third party sensors 112 or persons 114 in order to broaden the sources of behavioral data used to create micro-sandbox definitions 108. Some examples of third party sensors 112 include intrusion detection systems, firewalls, anti-virus products, compilers, and static or dynamic code analysis tools, All of these systems produce some type of behavioral data that can be consumed by the cloud component 102 and used to create or modify micro-sandbox definitions 108.

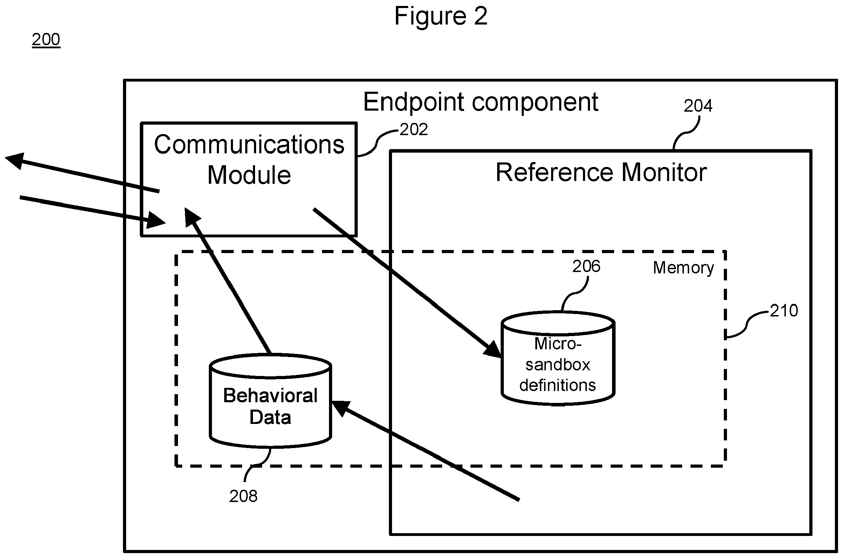

Figure 2 is a functional block diagram of an endpoint component 200 according to one embodiment of the disclosure. For instance, endpoint components 106 depicted in FIG. 1 may be implemented as endpoint component 200 according to various embodiments. In this embodiment, an endpoint component comprises a reference monitor 204, a communications module 202, one or more micro-sandbox definitions 206, and behavioral data 208. The endpoint component 200 may also include a memory 210 in which to store the micro-sandbox definitions 206 and behavioral data 208. The reference monitor 204 is responsible for implementing all the rules in the sandbox and micro-sandbox definitions 206. In some embodiments, reference monitor 204 is configured to enforce the micro-sandbox definitions 206 on processes running on the endpoint component 106. The reference monitor 204 may also be configured to generate behavioral data 208 about processes running on endpoint component 106 as directed by the micro-sandbox definitions 206. The communications module 202 may be configured to interact with either or both of the management component 104 or the cloud component 102 according to various embodiments. For instance, the communications module 202 may be configured to receive micro-sandbox definitions 206 from the cloud component 102 and/or the management component 104 and to transmit behavioral data 208 to one or both of the cloud component 102 and the management component 104.

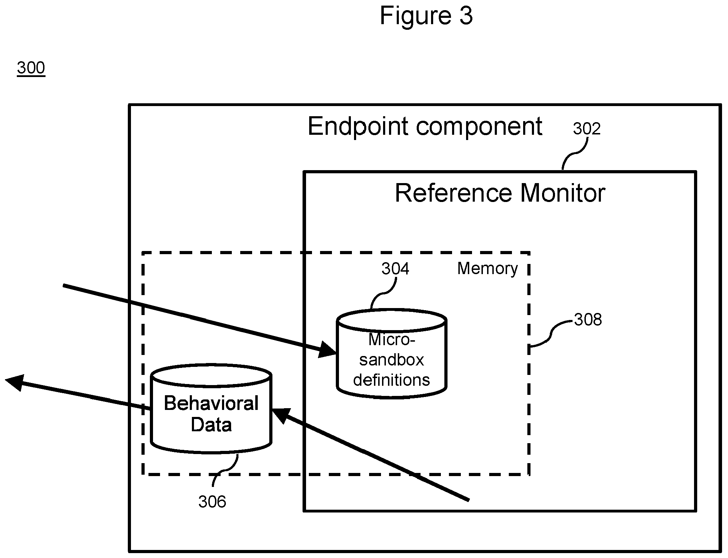

Figure 3 is a functional block diagram of an endpoint component 300 according to various embodiments of the disclosure. In this embodiment, an endpoint component comprises a reference monitor 302, one or more micro-sandbox definitions 304 and behavioral data 306. The reference monitor 302 is responsible for implementing rules of micro-sandboxes 304. The reference monitor 302 can be configured to read micro-sandbox definitions stored in micro-sandbox 304 and to enforce them on the processes running on the endpoint component 106. The reference monitor 302 can also be configured to generate behavioral data 306 about the processes running on endpoint component 106 depending on the micro-sandbox definitions 304. According to some embodiments, external, out-of-band mechanisms can provide the micro-sandbox definitions 304 and collect the behavioral data 306. Examples of external, out-of-band mechanisms include manual file transfer via a USB thumb drive, automated file transfer via command line file transfer programs such as ssh or ftp, automated file transfer via shell scripts copying files to and from network file shares, or manual file transfer via email attachments. The endpoint component 300 may also include a memory 308 in which to store the micro-sandbox definitions 304 and behavioral data 306.

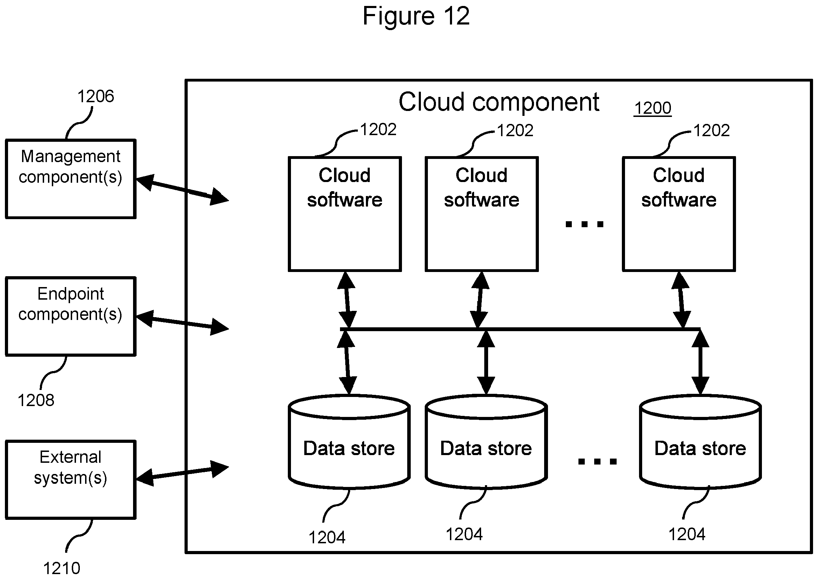

Figure 12 is a functional block diagram of a cloud component 1200 according to various embodiments of the disclosure. As shown in FIG. 12, cloud component 1200 is in communication with one or more management components 1206, one or more endpoint components 1208 and one or more external systems 1210. For instance, cloud component102 depicted in FIG. 1 may be implemented as cloud component 1200 according to various embodiments.

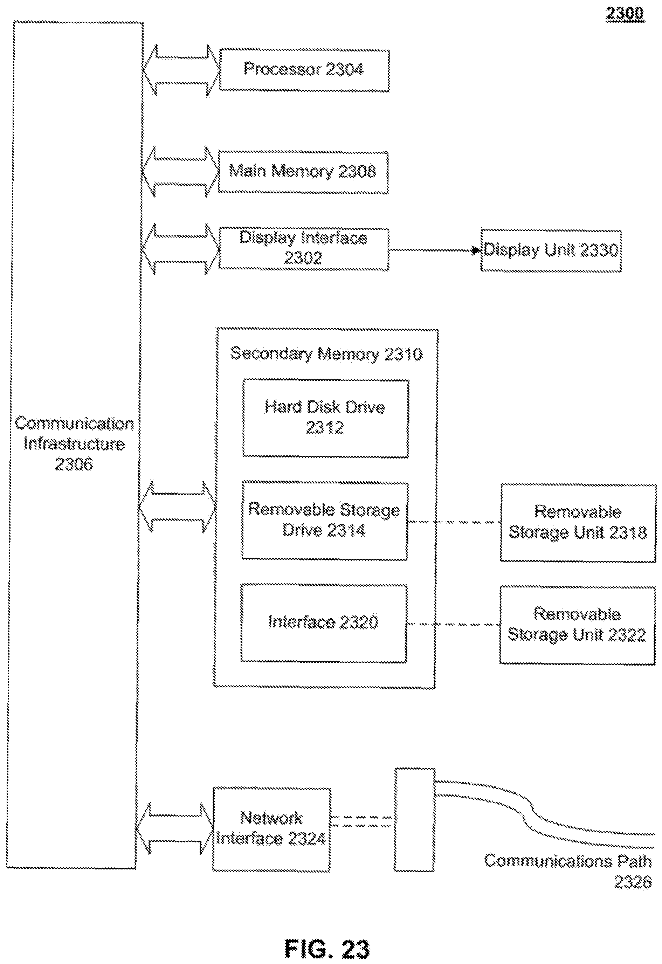

As shown in FIG. 12, cloud component 1200 comprises one or more data stores 1204 and cloud software 1202 configured to be executed on one or more processors and/or computer systems that may be part of cloud component 1200 according to various embodiments. For instance, while not specifically shown in FIG. 12, cloud component 1200 could be implemented using a computer system such as computer system 2300 shown in FIG. 23. The cloud software 1202 can be configured to facilitate collection of behavioral data from management components 1206, endpoint components 1208 and external systems 1210 and stores it into the data store(s) 1204. The cloud software 1202 also provides a programmatic interface for external systems 1210 to query the behavioral data. In one embodiment, all instances of the cloud software 1202 run on physical computer systems. In another embodiment, all instances of the cloud software 1202 run on virtual computer systems. Other embodiments may run instances of the cloud software 1202 on other types of computer systems or on any combination of types of computer systems. In one embodiment, the data store 1204 is a single central relational database. In another embodiment, the data store 1204 is a distributed, non-relational database. In another embodiment, the data store 1204 is an unstructured set of files. Other embodiments may use other types of data stores or any combinations of types of data stores. In one embodiment, all the instances of cloud software 1202 in the cloud component are functionally equivalent, i.e., they all can perform all the functions of the cloud component. In another embodiment, a different subset of cloud software 1202 instances performs each of the cloud component's functions, e.g. one subset receives the behavioral data, another subset processes the behavioral data and creates micro-sandbox definitions, another subset accepts and responds to queries, etc. Other embodiments may perform any portion of the cloud component's functions on any or all of the cloud software 1202 instances.

Management component or components 1206 are in communication with cloud component through an appropriate communications protocol. According to various embodiments, management component 1206 may be responsible for managing the one or more of the endpoint components 1208. For instance, management component 1206 function similarly to management component 104 depicted in FIG. 1. Similarly, endpoint component or components 1208 may function similarly to endpoint component 106 depicted in FIG. 1. External systems 1210 comprise systems that are not endpoint components 1208 or management components 1206 that provide input to or retrieve output from the cloud component. An example of an external system 1210 that provides input to the cloud component is a third party sensors that send behavioral data into the cloud component to broaden the sources of behavioral data the cloud component uses to create micro-sandbox definitions. An example of an external system 1210 that retrieves output from the cloud component is an organization retrieving behavioral data about a specific open-source library to determine whether to use the library.

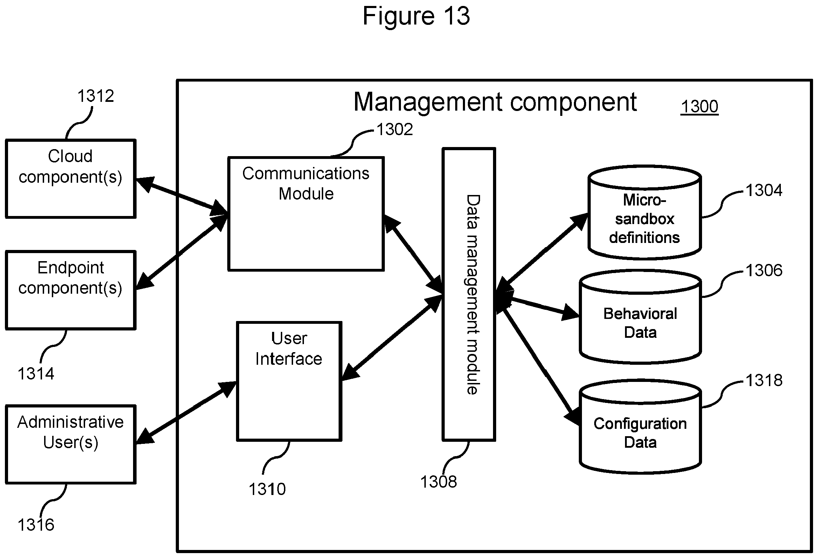

Figure 13 is a functional block diagram of a management component 1300 according to one embodiment of the disclosure. For instance, management component 104 depicted in FIG. 1 may be implemented as management component 1300 according to various embodiments. Management component 1300 comprises a communications module 1302, a data management module 1308 and a user interface 1310 as well as micro-sandbox definitions 1304, behavioral data 1306, and configuration data 1318. The communications module 1302 receives micro-sandbox definitions 1304 from cloud components 1312 and transmits them to endpoint components 1314. Additionally, the communications module 1302 receives behavioral data 1308 from endpoint components 1314 and transmits it to cloud components 1312. The user interface 1310 communicates with administrative users 1316, accepting configuration data 1318. The data management module 1308 acts as an intermediary between the micro-sandbox definitions 1304, behavioral data 1306 and configuration data 1318 stored in the management component 1300 and the communications module 1302 and user interface 1310 which transfer that data into and out of the management component 1300.

The management component 1300 provides the administrative users 1316 in an organization the ability to configure and monitor one or more endpoint components 1314. In one embodiment, the management component 1300 allows administrative users 1316 to specify whether the micro-sandboxes on a subset of the endpoint components 1314 should be placed in test mode, and thus only record behaviors that would normally be blocked. In another embodiment, the management component 1300 allows administrative users 1316 to configure the amount of behavioral data that is recorded by endpoint components 1314, in order to make performance adjustments. In another embodiment, the management component 1300 allows administrative users 1316 to monitor internal errors generated by the endpoint components 1314. Other embodiments may allow administrative users 1316 to configure or monitor additional operational aspects of the endpoint components 1314 or any combination of operational aspects of the endpoint components 1314. The management component 1300 is an intermediary in communications between the endpoint components 1314 and the cloud component 1312.

Referring back to FIG. 1, endpoint components 106 can be configured to collect and store behavioral data 110 according to various embodiments. Behavioral data 110 is information collected about the actions of a process running on a computer system. For instance, behavioral data 110 may comprise information about the environment in which the process is running and information about function calls the process makes. Examples of information collected about a function call include the caller or full calling sequence of the function, the parameters of the function, the result and output of the function, etc. The endpoint component 106 records behavioral data 110 as directed by the micro-sandbox definitions 108. But behavioral data 110 can come from many other sources as well, e.g., from third party sensors, from databases of behavioral data, from claims made by developers of the program, from persons with experience using the programs, etc.

The endpoint component 106 shown in FIG. 1 receives micro-sandbox definitions 108 and other configuration data and enforces the micro-sandbox limitations on all applications running on the computer system containing the endpoint component 106. In one embodiment, the endpoint component 106 receives the micro-sandbox definitions 108 and configuration data from the management 104 and/or cloud 102 components. In another embodiment, an external mechanism places files containing micro-sandbox definitions 108 and configuration data on the endpoint system's 106 memory and the endpoint component reads them. In another embodiment, the endpoint component directly updates its local micro-sandbox definitions using behavioral data it has recorded. Other embodiments may use other mechanisms to provide micro-sandbox definitions 108 and configuration data to the endpoint component 106.

The endpoint component 106 produces behavioral data 110 based on the micro-sandbox definitions 108. In one embodiment, the endpoint component 106 sends behavioral data 110 to the management component 104. In another embodiment, the endpoint component 106 sends behavioral data 110 to the cloud component 102. In another embodiment, the endpoint component 106 stores behavioral data 110 in files in memory and those files are collected by an external mechanism. Other embodiments may use other mechanisms or any combination of mechanisms to store or distribute behavioral data 110.

The cloud component 102 receives behavioral data 110 from many sources and saves it in its data store. In one embodiment, the cloud component 102 receives behavioral data from one or more endpoint components 106 and/or management components 104. In another embodiment, the cloud component receives data from third party sensors 112. In another embodiment, the cloud component 102 receives behavioral data 110 directly from users 114 entering it or providing files containing it. Other embodiments may use other mechanisms or any combination of mechanisms to accept behavioral data 110.

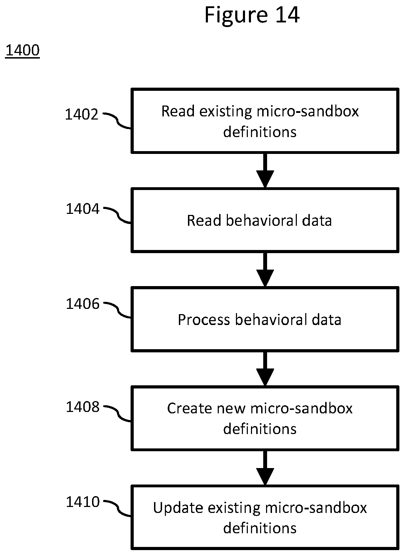

Figure 14 is a flowchart depicting a method 1400 of updating micro-sandbox definitions and creating new micro-sandbox definitions according to various embodiments. For instance, method 1400 could be performed by cloud component 1200 by processing the behavioral data in the data store 1204 to update existing micro-sandbox definitions and create new micro-sandbox definitions, according to an example embodiment. Accordingly, method 1400 will be described with respect to cloud component from FIG. 12, but this is only for illustrative purposes. Method 1400 need not be limited to being performed by cloud component 1200.

Method 1400 begins with step 1402 during which existing micro-sandbox definitions can be read from the data store 1204 by, for instance, cloud software 1202. In step 1404 the cloud software 1202 can read the behavioral data from the data store 1204. In step 1406, the cloud software 1202 processes both sets of data. In step 1408 the cloud software 1202 creates any new micro-sandbox definitions resulting from the processing in step 1406 and writes them to the data store 1204. In step 1410 the cloud software 1202 updates any existing micro-sandbox definitions with changes resulting from the processing in step 1406 and writes them to the data store 1204.

In one embodiment, step 1406 compares the latest behavioral data for a particular program against the existing micro-sandbox definition for that program to see if any new behavior exists in the data. If new behavior is found, step 1410 updates the micro-sandbox definition for the program to allow the new behavior. In another embodiment, step 1406 counts the number of endpoint components that have sent in data for each program and identifies the program that was recorded by the greatest number of endpoints and that doesn't already have a micro-sandbox definition. Step 1408 creates a new micro-sandbox for that program. In another embodiment the step 1406 counts the number of endpoints that have recorded each individual behavior for a specific program and identifies behaviors recorded by a large number of endpoint components as allowed behaviors. Step 1406 also identifies behaviors recorded by a small number of endpoint components as denied behaviors. Step 1410 updates the program's micro-sandbox definition with the newly identified allowed and denied behaviors. In another embodiment, step 1406 uses reputation data from a third party sensor to decide whether to add new behaviors seen in the behavioral data to the micro-sandbox definition for a program. Reputation data is an estimation of whether the program is unlikely to be malicious (a good reputation) or is likely to be malicious (a bad reputation). If the program has a good reputation, step 1410 updates the micro-sandbox definition for the program to allow the new behavior. If the program has a bad reputation, step 1410 does not update the micro-sandbox definition for the program. Other embodiments may use other processing methods or any combination of processing methods in steps 1406-1410 to update or create micro-sandbox definitions.

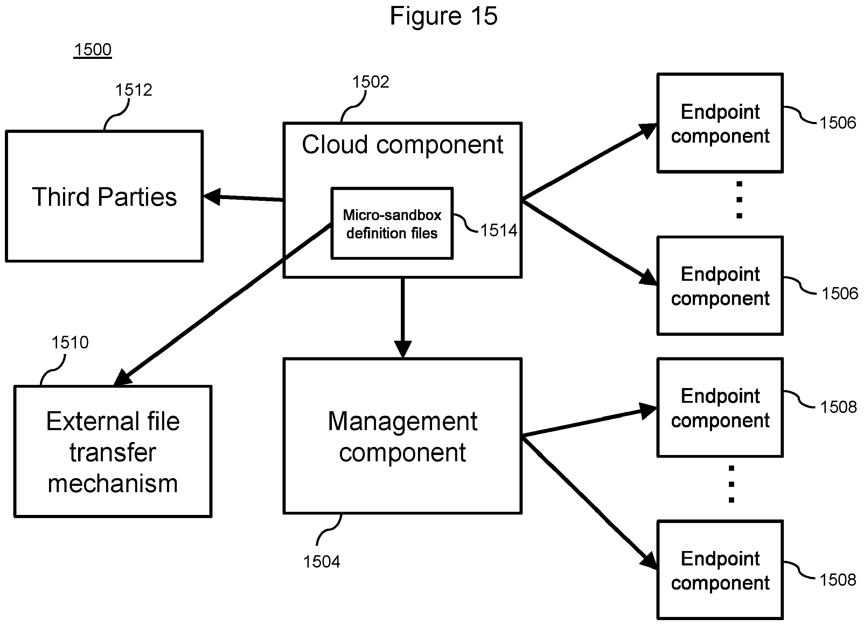

Once it creates new or updated micro-sandbox definitions, the cloud component makes the definitions available for use by endpoint components or other third party consumers. Figure 15 is a functional block diagram of mechanisms and/or a system 1500 for distributing new or updated micro-sandbox definitions according to various embodiments of the disclosure. In one embodiment, the cloud component 1502 sends the micro-sandbox definitions 1514 to one or more management components 1504, which in turn send the definitions to one or more endpoint components 1506 which enforce them. In another embodiment, the cloud component 1502 sends the micro-sandbox definitions 1514 directly to one or more endpoint components 1508 which enforce them. In another embodiment, the cloud component 1502 stores new and updated micro-sandbox definitions 1514 into files, which are collected by an external file transfer mechanism 1510. Examples of external file transfer mechanisms include automated file transfer via command line file transfer programs such as ssh or ftp, or automated file transfer via shell scripts copying files to and from network file shares. In another embodiment, the cloud component 1502 provides a programmatic interface allowing third-parties 1512 to retrieve the micro-sandbox definitions. Other embodiments may use other mechanisms or any combination of mechanisms to store or distribute micro-sandbox definitions.

The cloud component 1502 provides one or more interfaces allowing third-parties 1512 to query the data store. The data collected and processed by the cloud component 1502 represents a valuable resource about the behavior of programs and libraries in widespread use. The primary purpose for collecting the data is to create micro-sandbox definitions for use by the endpoint components. But an important secondary use is to provide behavioral data to third parties 1512 who want it. There are a variety of third parties that might want to query behavioral data in the cloud component data store for a variety of reasons. For instance, organizations doing post-mortem analysis of suspected attacks could use behavioral data from the cloud component 1502 as input to their analysis. Software developers could use the behavioral data for their program to see if there are any unexpected accesses or privileges used by their program. Organizations determining whether to use specific open-source libraries could use the behavioral data for those libraries to determine whether they require access or privileges beyond what the organization is willing to allow. In one embodiment, the cloud component 1502 provides a programmatic HTTP interface to query the data store. Third parties 1512 create programs to make HTTP queries against the cloud component 1502 and receive behavioral data or micro-sandbox definitions in response. In another embodiment, the cloud component 1502 provides a web-based user interface to query the data store. People from third parties 1512 connect a web browser to the web-based interface, enter queries via the interface, and the cloud component creates human readable versions of behavioral data or micro-sandbox definitions and displays them in the web-based interface. Other embodiments may use other mechanisms or any combination of mechanisms to accept queries and return behavioral data or micro-sandbox definitions.

The principle of least privilege requires that in a particular abstraction layer of a computing environment, every entity (such as a process, a user, or a program, depending on the subject) must be able to access only the information and resources that are necessary for its legitimate purpose. By way of example, consider a situation where a program module must be able to read from an address of a resource in order to perform its function, but would never need to write to that address. The principle of least privilege would dictate that the module should be only given read privileges and not write privileges to the resource.

A module is a software component or part of a program that contains one or more functions. Examples of modules include the main program and dynamically linked libraries. Many modules contain hundreds or even thousands of individual functions. In many cases, the functions in a module are only loosely related to each other. This results in the situation where a process loads an entire module into memory even though it only needs to use one or two functions in the module. The remaining functions in the module, while unnecessary to the proper function of the process, are available to malicious software in its attempt to subvert the process.

While a sandbox has rules for access to system resources, it only supports coarse definition of the portion of code or data to which the sandbox applies. Micro-sandboxes can be used to obtain finer granularity.

A micro-sandbox is a set of rules for access to system resources and applies to a particular portion of code or data on a system running the endpoint component. The portion of code or data can be very broad, e.g., a set of processes executing on the endpoint system, or very specific, e.g., a small set of instructions corresponding to a few lines of source code within a program, or anywhere in between, e.g., a single process on the endpoint system, a functional memory region in a process, e.g., the stack or the heap, a single library within a process, a single function within a library, or any other portion of the system that proves useful to control.

In contrast to a sandbox, a micro-sandbox can apply least privilege to very fine-grained portions of code or data, e.g., specific functions within a library or even smaller code segments within a function. The ability to enforce least privilege at this very fine-grained level is critical to protecting against sophisticated attacks. When attempting to control access to a very sensitive resource or to control the use of a very privileged function, the smaller the portion of code permitted to perform the action the more secure the system is. In a sandbox system, if a single function within a library performs the action, the sandbox must grant permission to the entire library, which can contain hundreds of loosely related functions, or even to the entire process, which contains dozens of modules. Thus, if any portion of the library is subverted by malicious code, it is permitted by the sandbox to perform the privileged action. However, a micro-sandbox, with its ability to control very fine-grained portions of code, can limit the use of the privileged action to a single function within the library, or even to a specific portion of that function. In this situation, if other portions of the library are subverted, they are not permitted to perform the privileged action. This greatly reduces the attack surface available to malicious code and greatly increases system security.

The access control rules in a micro-sandbox can be very broad, e.g., allow read access to all files on the disk, or very specific, e.g., allow read access to the metadata of a single file on the disk. Resources referenced in the access control rules can be any portion of the endpoint system that can be accessed by a process running on the system, e.g. individual disks, groups or types of disks, groups of files or individual files on the disks, the system memory, network interfaces, individual addresses or groups of addresses on the network, external systems or devices, or other peripheral devices. Access rights used in access control rules can be very broad, e.g. read access, or very specific, e.g. ejecting removable media, or anywhere in between.

A control point is a particular location in executable code at which the micro-sandbox wants the endpoint component to make a decision about further execution of the code. In one embodiment, the control point is at the beginning of a function. In another embodiment, the control point is at the beginning of a particular set of instructions within a function. Other embodiments may use other techniques or any combination of techniques to define control points.

In one embodiment, the endpoint component reads export table information from the module file to find addresses of functions to be used as control points. In another embodiment, the endpoint component reads the debugging symbol data produced for the module to find addresses of functions to be used as control points. In another embodiment, the endpoint component dynamically analyzes the module to determine where functions begin and uses that information to find addresses of functions to be used as control points. In another embodiment, the endpoint component reads a list of function signatures and finds the locations of those signatures in memory to find addresses of functions to be used as control points. The function signature is a sequence of binary data at the beginning of the function that is unique within the module. Other embodiments can use other techniques to find addresses of functions to be used as control points.

The endpoint component intercepts normal software execution on the endpoint system at each defined control point. In one embodiment, the endpoint component uses functions provided by the operating system to gain control at a control point. In another embodiment, the endpoint component modifies the interrupt vector table entry or the import descriptor table entry for a function to gain control at a control point. In another embodiment, the endpoint component modifies the memory containing the instructions at a control point to gain control. Other embodiments may use other techniques or a combination of techniques to intercept software execution at desired control points.

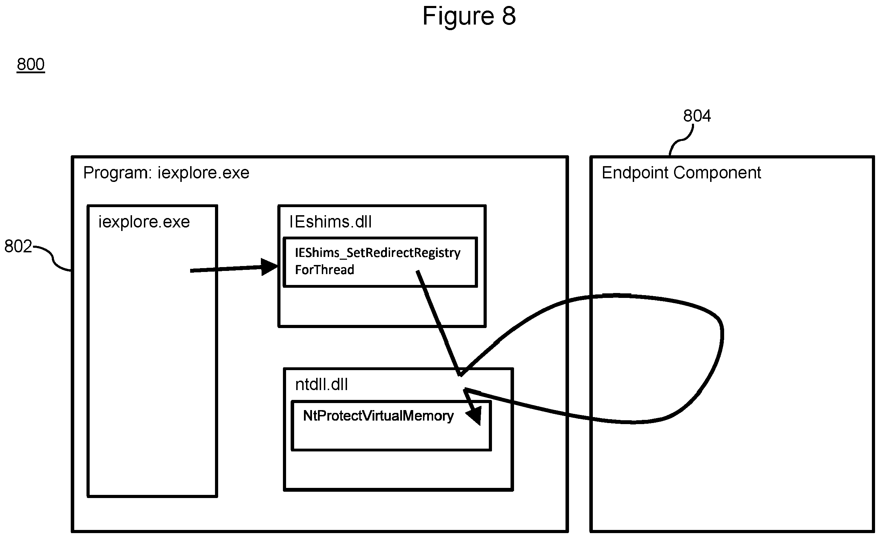

Figure 8 is a conceptual depiction of an intercepted function call 800, according to embodiments. Process 802 makes a function call and the endpoint component 804 intercepts it. In this example, the process 802 is running the program iexplore.exe. The example shows iexplore.exe calling the IEShims_SetRedirectRegistryForThread function in module IEShims.dll which in turn is calling the NtProtectVirtualMemory function in the module ntdll.dll. The endpoint component 804 intercepts the function call from IEShims_SetRedirectRegistryForThread to NtProtectVirtualMemory.

Once the endpoint component has intercepted execution at a control point, it determines which portion of code or data on the endpoint system initiated the call to the control point. Determining the caller may comprise any or all of the following techniques described below.

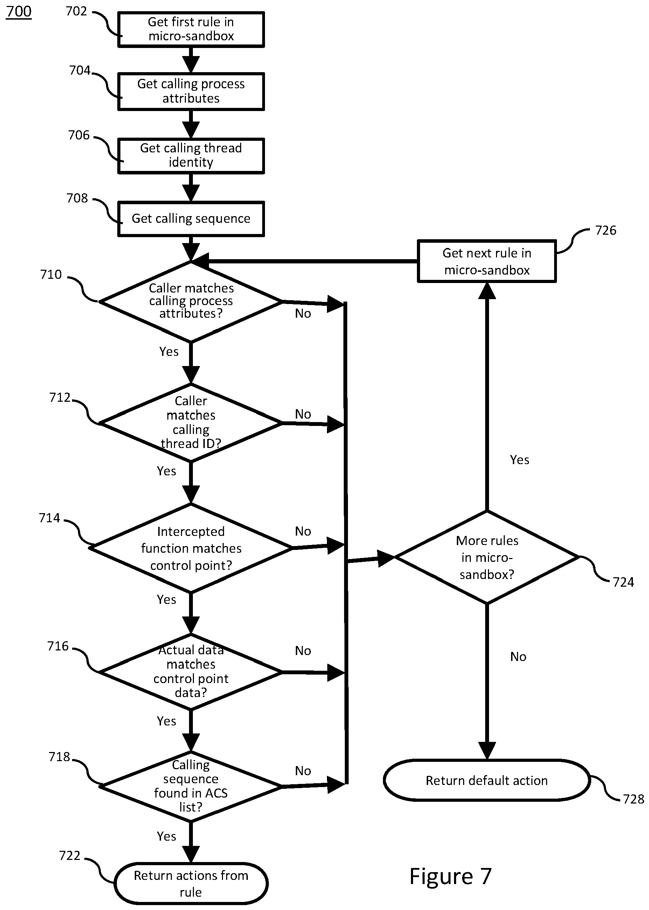

According to some embodiments, the endpoint component determines the caller by determining the attributes of the process on the endpoint system which initiated the call, as shown in step 704 of Figure 7, described below. In one embodiment, the endpoint component calls one or more functions provided by the operating system to determine the process attributes. In another embodiment, the endpoint component reads operating system data structures directly to determine the process attributes. Other embodiments may use other techniques or any combination of techniques to determine the process attributes. Determining the initiating process attributes includes determining the program running within the process, the identity under which the process is executing, the privileges held by the process, the lineage of the process, i.e. the process' parent, the process' parent's parent, etc. Some embodiments may require determining additional process attributes.

According to some embodiments, the portion of code or data that initiated the function call can be determined by determining which thread within a process initiated the call, as shown in step 706 of Figure 7, described below. In one embodiment, the endpoint component calls one or more functions provided by the operating system to determine the calling thread. In another embodiment, the endpoint component reads operating system data structures directly to determine the calling thread. Other embodiments may use other techniques or any combination of techniques to determine the calling thread.

The endpoint component can also determine which portion of code or data on the endpoint system initiated the call using a backtrace, according to some embodiments, as shown in step 708 of Figure 7, described below. A backtrace is a sequence of code addresses, starting with the currently executing function, followed by its caller, and so on. Since functions are nested when they are called, the backtrace shows the calling sequence that led to the intercepted function being called, i.e. the caller of the intercepted function, the caller's caller, the caller's caller's caller, and so on. In one embodiment, the endpoint component calls a function provided by the operating system to obtain the calling sequence. In another embodiment, the endpoint component examines data in the caller's address space to obtain the calling sequence. Other embodiments may use other techniques or any combination of techniques to obtain a calling sequence.

The endpoint component maps the addresses in the calling sequence to known memory regions in the process. The endpoint component determines the known memory regions using a variety of techniques. In one embodiment the endpoint component queries the operating system for a snapshot list of modules and memory regions. In another embodiment the endpoint component intercepts the operating system functions that load modules into memory. Other embodiments can use other techniques or combinations of techniques to create the list of modules and memory regions.

The endpoint component subdivides modules into lists of functions and the memory regions they occupy. In one embodiment, the endpoint component reads export table information from the module file to create the list of functions and memory regions. In another embodiment, the endpoint component reads the debugging symbol data produced for the module to create the list of functions and memory regions. In another embodiment, the endpoint component dynamically analyzes the module to determine where functions begin and uses that information to create the list of functions and memory regions. In another embodiment, the endpoint component reads a list of function signatures and finds the locations of those signatures in memory to create the list of functions and memory regions. The function signature is a sequence of binary data at the beginning of the function that is unique within the module. Other embodiments can use other techniques to create the list of functions and memory regions.

The endpoint component subdivides functions into code segments and the memory regions they occupy. In one embodiment, the endpoint component reads the debugging symbol data produced for the module to create the list of code segments and memory regions. Other embodiments can use other techniques to create the list of code segments and memory regions.

The endpoint component creates a list of memory regions outside of known modules, e.g., the stacks for all threads in a process, or memory regions that have execute permission.

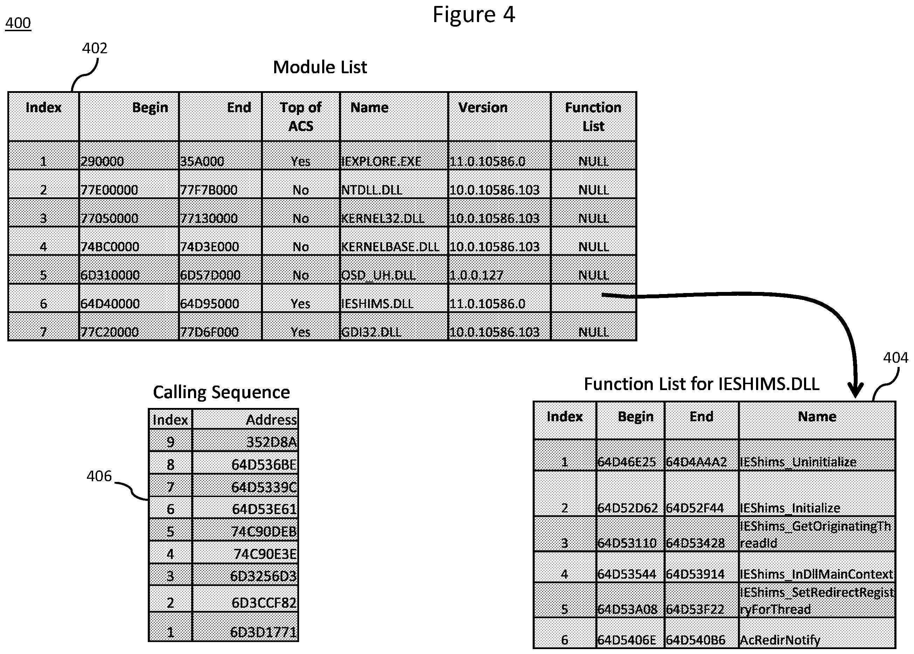

Figure 4 is a conceptual depiction of the data 400 used by the endpoint component to map the addresses to known memory regions in a process, according to embodiments. The module list 402 depicts the list of modules and the memory regions they occupy in the process. Module list 402 contains a list of various modules - here modules 1-7. The "Index" column specifies a reference number for the module. The "Begin" column specifies the beginning address of the module in the address space of the process and the "End" column specifies the ending address of the module in the address space of the process. The module occupies all the addresses in the process memory between the beginning and ending addresses. The "Top of ACS" column specifies a Boolean flag indicating whether the module should last module processed in a calling sequence because it signals the top of an assured calling sequence (ACS), the "Name" column contains the human readable name of the module, often a file name, the "Version" column contains the version number of the module, the "Function List" column contains a pointer to a table with a list of functions within the module along with the memory regions they occupy in the process's address space. A value of "NULL" in the "Function List" column indicates there is no function list for that module. Accordingly, as can be seen, module 2 (i.e. the module with index 2) has a beginning address of 77E00000, an ending address of 77F7B000, the Top Of ACS flag is set to "No" (i.e. processing of a calling sequence should continue past this module), the module name is "NTDLL.DLL", the version number is "10.0.10586.103", and the function list pointer is set to "NULL" (i.e. it has no function list).

The function list 404 depicts the list of functions within the IESHIMS.DLL module and the memory regions they occupy in the process. Function list 404 contains a list of various functions - here functions 1-6. The "Index" column specifies a reference number for the function. The "Begin" column specifies the beginning address of the function in the address space of the process and the "End" column specifies the ending address of the function in the address space of the process. The function occupies all the addresses in the process memory between the beginning and ending addresses. The "Name" column contains the human readable name of the function. Accordingly, as can be seen, function 4 (i.e. the function with index 4) has a beginning address of 64D53544, an ending address of 64D53914, and the function name is "IEShimsInD11MainContext."

Calling sequence 406 depicts a calling sequence to a function that was intercepted - here a sequence of nine addresses, 1-9. The "Index" column specifies a reference number for the address. The "Address" column specifies the address of the caller in the address space of the process. Accordingly, as can be seen, caller 5 (i.e. index 5 in the calling sequence 406) has an address of 74C90DEB.

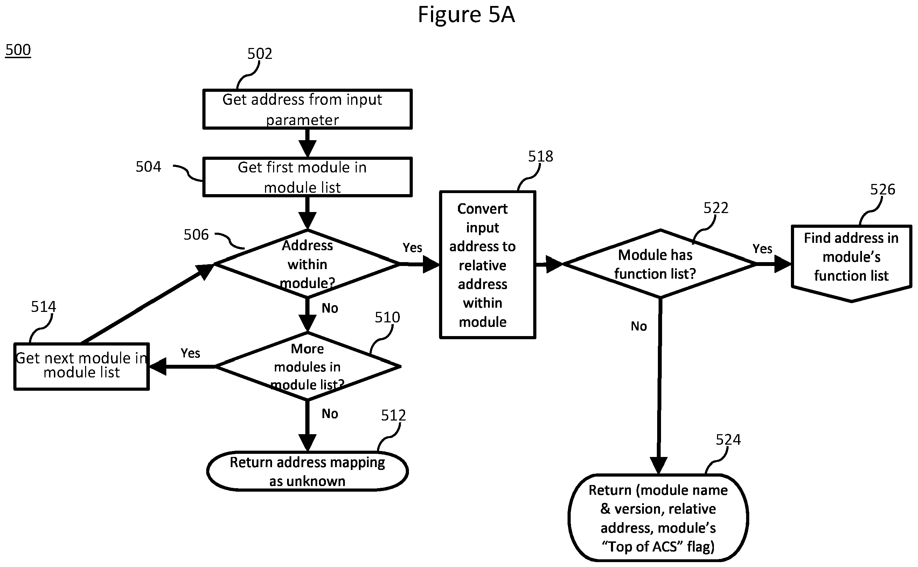

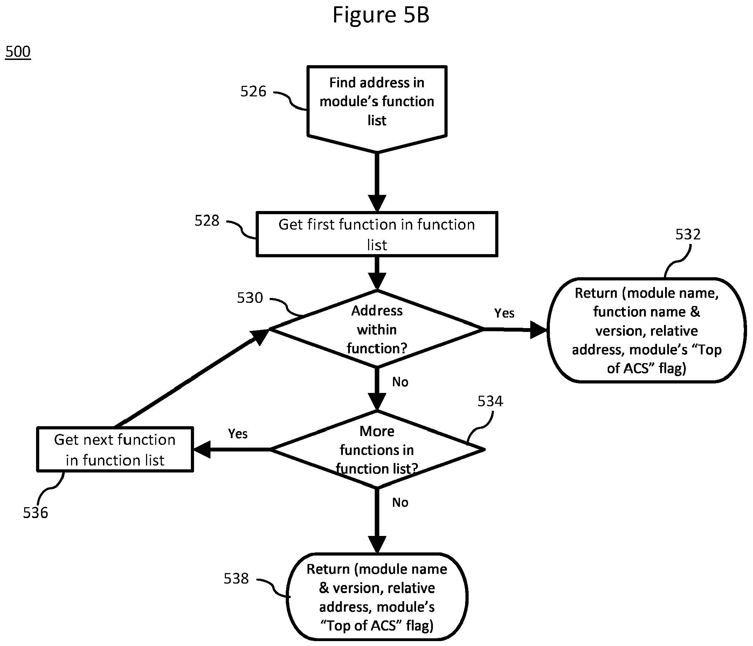

Figures 5A and 5B are a flowchart depicting method 500 of mapping an address to a memory region in a process, according to an example embodiment. For ease of explanation, method 500 will be described with reference to the data 400 depicted in Figure 4, however it need not be so limited.

The system attempts to map the address in index 6 of calling sequence 406 to a known memory region. To do this, the system calls method 500 providing 64D53E61 as input. According to the method, step 502 obtains the address to be mapped (64D53E61) from an input parameter to the method. Step 504 obtains the record at index 1 in the module list 402. Step 506 compares the address from index 1 in the calling sequence 406 to the Begin and End addresses of index 1 in the module list to determine if the calling sequence address falls within the IEXPLORE.EXE module. For the address to be mapped, the result at step 506 is No. Step 510 then checks the module list for more records and the result is Yes, since there is an index 2. Step 514 obtains the record at index 2 in the module list 402 and returns to step 506. For indices 2, 3, 4, and 5 in the module list 402, steps 506, 510 and 514 repeat and the method continues to Step 506 using the record at index 6 in the module list.

At this point, step 506 returns Yes - the address to be mapped is within module IESHIMS.DLL, which is index 6 in the module list 402. Step 518 then converts the address to be mapped into a relative address from the beginning of the module, by subtracting the Begin address from index 6 of module list 402 from the address being mapped. The specific calculation is 0x64D53E61-0x64D40000= 0x13E61.

The method proceeds to Step 522, which looks at the Function List field in the record at index 6 in the module list 402 and sees that Yes the module has a function list, i.e. the field is not NULL. Step 522 then moves to step 526 to determine which function the address to be mapped falls within.

Step 528 obtains the record at index 1 in the function list 404 for module IESHIMS.DLL. Step 530 compares the address to be mapped to the Begin and End addresses of index 1 in the function list 404 to determine if the calling sequence address falls within the IEShims_Uninitialize function. For the address to be mapped, the result at step 530 is No. Step 534 then checks the function list 404 for more records and the result is Yes, since there is an index 2. Step 536 obtains the record at index 2 in the function list 404 and returns to step 530. Steps 530, 534 and 536 repeat for indices 2, 3, and 4 of the function list 404, and the method continues to Step 530 using the record at index 5 in the function list 404. Step 530 determines Yes, the address falls within the function IEShims_SetRedirectRegistryForThread at index 5 of the function list 404. Step 532 returns the mapping information for the address to be mapped: the module name (IESHIMS.DLL), the module version number (11.0.10586.0), the function name (IEShims_SetRedirectRegistryForThread), the relative address (0x13E61) and the value of the module's "Top of ACS" field (Yes).

As the module list 402 shows, not all modules have function lists. This can happen for a variety of reasons. Perhaps the module does not expose enough data to allow the construction of a function list. Perhaps the micro-sandbox rules do not require a function list for a specific module and therefore one is not constructed. If there is no function list for a module, then when method 500 maps an address to that module, it cannot proceed to also map it to a function in the module.

As an example, the system attempts to map the address in index 5 of calling sequence 406 to a known memory region. To do this, the system calls method 500 providing 74C90DEB as input. In a manner similar to that described above, the method proceeds through steps 502, 504, 506, 510, and 514 until step 506 returns Yes for index 4 in the module list 402 - the index for module KERNELBASE.DLL. The method proceeds through step 518 to step 522. Step 522 returns No since index 4 in the module list 402 has "NULL" in the Function List column. The method proceeds to step 524, which returns the mapping information for the address in index 5 of calling sequence 406: the module name (KERNELBASE.DLL), the module version number (10.0.10586.103), the relative address (0xD0DEB) and the value of the module's "Top of ACS" field (No). Unlike step 532, step 524 does not return a function name. Thus the caller of method 500 must handle the possibility that the method can fail to return a function name.

A function list for a module may not be comprehensive in some cases. In this case, when method 500 maps an address to a module, it may not be able to also map it to a function in the module.

As an example, assume that the function list 404 only contains indexes 1-4. The system attempts to map the address in index 6 of calling sequence 406 to a known memory region. The method proceeds through steps 502, 504, 506, 510, and 514 until step 506 returns Yes for index 6 in the module list 402 - the index for module IESHIMS.DLL. The method proceeds through steps 518, 522, 526, 528, 530, 534, and 536 until it reaches step 534 for index 4 in function list 404. At this point, step 534 returns No since index 4 in function list 404 is the last index in the function list 404 (because this example started with the assumption that the function list 404 only contained indexes 1-4). The method proceeds to step 538, which returns the mapping information for the address in index 6 of calling sequence 406: the module name (IESHIMS.DLL), the module version number (11.0.10586.0), the relative address (0x13E61) and the value of the module's "Top of ACS" field (Yes). Step 538 does not return a function name because although the IESHIMS.DLL module does have a function list 404, that function list 404 (with only indexes 1-4) does not contain a mapping for the address in index 6 of calling sequence 406. Thus the caller of method 500 must handle the possibility that the method can fail to return a function name.

### What is an assured calling sequence (ACS)?

The portion of the calling sequence that a micro-sandbox can reliably use in its rules (i.e. the portion of the calling sequence that cannot be subverted by the higher level functions) is an Assured Calling Sequence or ACS.

When the calling sequence at a control point is obtained, the first address in the sequence is the address that will be at the top of the stack when the control point executes its RETURN instruction. The RETURN machine instruction "transfers program control to a return address located on the top of the stack." It is known that the hardware cannot be subverted, so at a minimum, the calling sequence of length 1 is assured.

The second address in the calling sequence is the address that will be at the top of the stack when the caller of the control point executes its RETURN instruction. Again, the hardware was trusted, but can it be trusted that the second address will really be at the top of the stack when the caller executes its RETURN instruction? In other words, can the code that executes between the RETURN to the control point's caller (the first address in the calling sequence) and when the caller executes a RETURN instruction be trusted to only manipulate the stack "properly" so that the second address in the calling sequence is indeed at the top of the stack at that time? Improper stack manipulation could occur for two reasons:

The caller's code has a defect that improperly manipulates the stack, OR

The caller's code somehow allows code farther up in the calling sequence to make the caller improperly manipulate the stack.

The first case can be ignored because the problem of straight-forward code defects cannot be solved in this context. Besides, this category of bug likely results in non-functioning software rather than software that can be subverted.

The second case, however, needs to be addressed. If the caller's code references non-executable memory to obtain addresses of code it then executes, it can be subverted. For example, if the caller reads a table of function addresses and then calls (or otherwise executes) that code at that address, it's possible for code farther up the calling sequence to insert an address of its own choosing into the table, so the caller executes code that will improperly manipulate the stack. Similar issues can occur if the caller obtains a code address from a global variable or from an argument passed into the caller. All of these situations create the possibility for malicious code farther up the calling sequence to affect the addresses lower in the sequence, thus undermining the assurance we want.

If there can be confidence that the caller of the control point does not contain behaviors in category #2 then the calling sequence of length 2 is assured. This confidence is based on an implicit trust in the author/publisher of the code, explicit analysis of the code, etc.

This analysis is performed for each subsequent address in the calling sequence. The assured calling sequence (ACS) is the maximum length calling sequence that does not contain any functions with a behavior in category #2. This is the portion of the calling sequence that cannot be subverted by the higher level functions. Therefore, this is the portion of the calling sequence that a micro-sandbox can reliably use in its rules.

### Using Assured Call Sequences (ACSs) in Micro-sandboxes

The endpoint component uses one of the interception techniques described above to gain control of execution at each control point and then executes its decision making logic to determine how to proceed. The decision making logic at a control point obtains the calling sequence that resulted in the control point being invoked using one or more of the techniques described above. After obtaining the calling sequence, the endpoint component determines which module contains each element of the calling sequence, using techniques described above for mapping addresses to known memory regions. At this point, the endpoint component has both the exact path that led to the control point (from the individual addresses in the calling sequence) and a sequence of modules that led to the control point. A calling sequence can be very long, e.g. 20, 30 or even 50 addresses, if it is followed to the very top. As described above, the ACS is a subset of the full calling sequence. Typically only a subset of the ACS is necessary for the decision making logic to enforce the micro-sandbox rules. Furthermore, the full ACS can be broken at module boundaries into smaller, per-module ACSs.

In one embodiment, an ACS is a list of modules, module versions and specific relative offsets in the modules. In order for a calling sequence to match the ACS, each address in the calling sequence must exactly match its corresponding module/version/relative address tuple in the ACS. In another embodiment, an ACS is a list of modules and functions within modules. In order for a calling sequence to match the ACS, each address in the calling sequence must fall within the range of the function in the corresponding module/function pair. Other embodiments can use other techniques or combinations of techniques to represent ACSs.

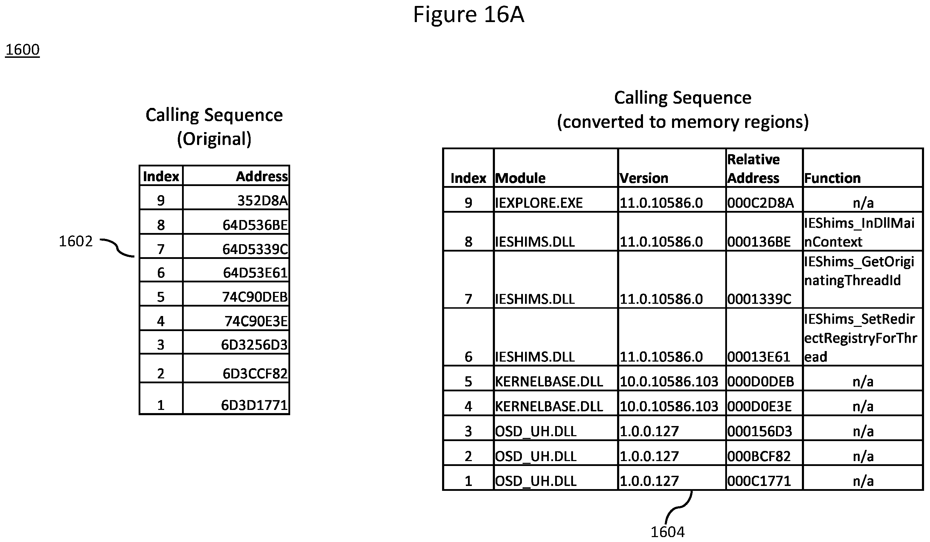

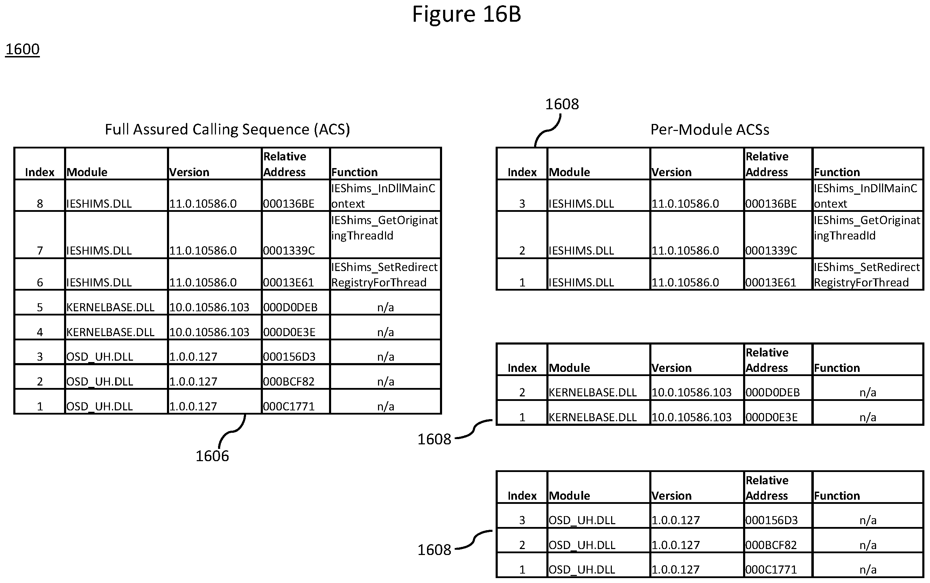

Figures 16A and 16B are a conceptual depiction of the data 1600 in a calling sequence as it is transformed by the endpoint component, according to embodiments. The original calling sequence 1602 is a list of absolute addresses in a process showing how the control point was invoked - here a sequence of nine addresses, 1-9. The "Index" column specifies a reference number for the address. The "Address" column specifies the address of the caller in the address space of the process. Accordingly, as can be seen, caller 5 (i.e. index 5 in the calling sequence 1602) has an address of 74C90DEB.

The converted calling sequence 1604 shows how each address in the original calling sequence 1602 has been converted into a memory region within the process - here a sequence of nine memory region mappings, 1-9. Each row of the converted calling sequence 1604 contains the memory region mapping for the address in the row with the same index in the original calling sequence 1602. The "Index" column specifies a reference number for the memory region mapping. The "Module" column contains the name of the module containing the original absolute address, the "Version" column contains the version number of the module containing the original absolute address, the "Relative Address" column contains offset from the beginning address of the module that corresponds to the original absolute address. The "Function" column contains the name of the function in the module containing the original absolute address. The value "n/a" is a special value that indicates either the module did not have a list of functions or the original absolute address did not fall within a known function in the module. Accordingly, as can be seen, index 6 in the converted calling sequence 1604 is the mapping for the original absolute address of 64D53E61 (from index 6 in the original calling sequence 1602) which maps to module "IESHIMS.DLL", version "11.0.10586.0", relative address 00013E61 and function "IEShims_SetRedirectRegistryForThread."

The full ACS 1606 shows how the converted calling sequence 1604 has been truncated to encompass only that portion of the calling sequence required by the micro-sandbox rules. The full ACS 1606 contains rows 1-8 of the original calling sequence 1604 and omits row 9 of the original calling sequence 1604.The columns in the full ACS 1606 are the same and have the same meaning as the columns in the converted calling sequence 1604.

The per-module ACSs 1608 show the full ACS 1606 split at the module boundaries. There is one per-module ACS 1608 for each unique module in the full ACS 1606. Rows 1-3 of the IESHIMS.DLL per-module ACS 1608 correspond to rows 6-8 of the full ACS 1606. Rows 1-2 of the KERNELBASE.DLL per-module ACS 1608 correspond to rows 4-5 of the full ACS 1606. Rows 1-3 of the OSD_UH.DLL per-module ACS 1608 correspond to rows 1-2 of the full ACS 1606. The columns in the per-module ACSs 1608 are the same and have the same meaning as the columns in the converted calling sequence 1604.

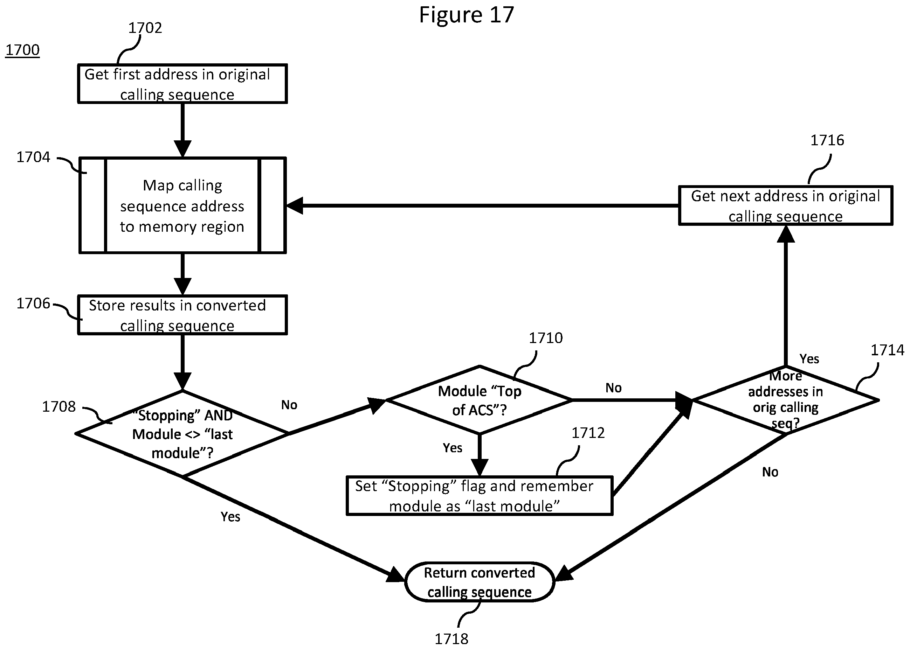

Figure 17 is a flowchart depicting method 1700 of creating a converted calling sequence 1604 from an original calling sequence 1602, according to an example embodiment. For ease of explanation, method 1700 will be described with reference to the data 1600 depicted in Figures 16A and 16B as well as the data 400 depicted in Figure 4, however it need not be so limited. According to the method, step 1702 obtains the address at index 1 in the original calling sequence 1602. Step 1704 calls a function to convert the address to a memory region. In one embodiment, Step 1704 calls method 500, depicted in Figure 5. Other embodiments of Step 1704 may call other methods or combinations of methods. Step 1706 stores the results returned by Step 1704 into row 1 of the converted calling sequence 1604. For the address at index 1 in the original calling sequence 1602, Step 1704 returns a module name of "OSD_UH.DLL", a module version number "1.0.0.127", a function name of "n/a", a relative address of 000C1771, and a "Top of ACS" flag of "No". Step 1708 then checks whether the method's "Stopping" flag has been set. At this point, the "Stopping" flag has not been set, so the method proceeds to Step 1710. Step 1710 checks the module "Top of ACS" flag returned by Step 1704, which was "No". Therefore, the method proceeds to Step 1714, which checks the original calling sequence 1602 for more addresses and the result is Yes, since there is an index 2. Step 1716 obtains the address at index 2 in the original calling sequence 1602 and returns to step 1704. Steps 1704, 1706, 1708, 1710, 1714, and 1716 repeat for indices 2-5 of the original calling sequence 1602, all of which return "Top of ACS" as "No".

At Step 1704 when the method 1700 has advanced to index 6 in the original calling sequence 1602. For the address at index 6 in the original calling sequence 1602, Step 1704 returns a module name of "IESHIMS.DLL", a module version number of "11.0.10586.0", a function name of "IEShims_SetRedirectRegistryForThread", a relative address of 00013E61, and a "Top of ACS" flag of "Yes". Step 1706 stores these results in row 6 of the converted calling sequence 1604 and Step 1708 sees the "Stopping" flag is still not set. Step 1710 then sees that the "Top of ACS" flag is "Yes" and so the method proceeds to Step 1712. Step 1712 sets the "Stopping" flag and saves "IESHIMS.DLL" as the "last module". Step 1714 returns "Yes" since the original calling sequence 1602 has a row 7. Steps 1704, 1706, 1708, 1710, 1712, 1714, and 1716 repeat for indices 7-8 of the original calling sequence 1602, all of which return a module of "IESHIMS.DLL". For each of these indices, Step 1708 now sees the "Stopping" flag set, but since the current module "IESHIMS.DLL" is the same as the "last module" saved by Step 1712, the method still proceeds to Step 1710 and so on.

At Step 1704 when method 1700 has reached index 9 of the original calling sequence 1602. For index 9, Step 1704 returns a module name of "IEXPLORE.EXE", a module version number of "11.0.10586.0", a function name of "n/a", a relative address of 000C2D8A, and a "Top of ACS" flag of "Yes". Step 1706 stores this data in row 9 of the converted calling sequence 1604. Step 1708 now sees both the "Stopping" flag set and the current module "IEXPLORE.EXE" not equal to the "last module" of "IESHIMS.DLL". Therefore the method proceeds to Step 1718 where it returns the full converted calling sequence 1604.

According to some embodiments, micro-sandboxes can use either full or per-module ACSs in their rules. Micro-sandboxes can use ACSs in a variety of ways in their rules, either alone or combined with other data available at the control point. In one embodiment, the micro-sandbox rules are simply lists of all full ACSs that legitimate software uses to invoke each control point. Calls to the control point made via ACSs listed in the micro-sandbox are permitted. Calls made via other calling sequences are blocked. In another embodiment, the micro-sandbox rules use lists of all per-module ACSs that legitimate software uses to invoke each control point. Once the endpoint component breaks the calling sequence into per-module segments, it compares each segment against the list of per-module ACSs for the corresponding module. Calls to the control point made via ACSs listed in the micro-sandbox are permitted. Calls made via other calling sequences are blocked. In another embodiment, micro-sandbox rules use per-module ACSs, and also specify a module order. In addition to comparing each segment of the calling sequence against the list of per-module ACSs for the corresponding module, the endpoint component also ensures that the module order in the calling sequence matches the module order specified in the micro-sandbox rule before allowing the call. In another embodiment, the micro-sandbox rules look at the parameters passed to the control point in addition to ACSs. For example, a rule for the "open file" control point might have one list of ACSs if the file name is "password.txt" and a different list of ACSs if the file name is "system.log". Calls to the control point are blocked unless they come from an ACS listed for the file name passed into the control point. This gives very granular control over what portions of code can access critical system files. In another embodiment, the micro-sandbox rules have a list of ACSs that are permitted for the control point, a different list of ACSs that are permitted and also cause a notification to the logged-in user, and yet a different list of ACSs that display a request to the logged-in user whether to permit or deny the call, with calls made via calling sequences not in any of the lists being blocked. In another embodiment, the micro-sandbox rules include the timing information. Some ACSs are only permitted if they invoke the control point within a certain amount of time after a specific module is loaded into the process while other ACSs are permitted at any time. Other embodiments can use other techniques or combinations of techniques using full ACSs, per-module ACSs, other control point data, and actions in micro-sandbox rules.

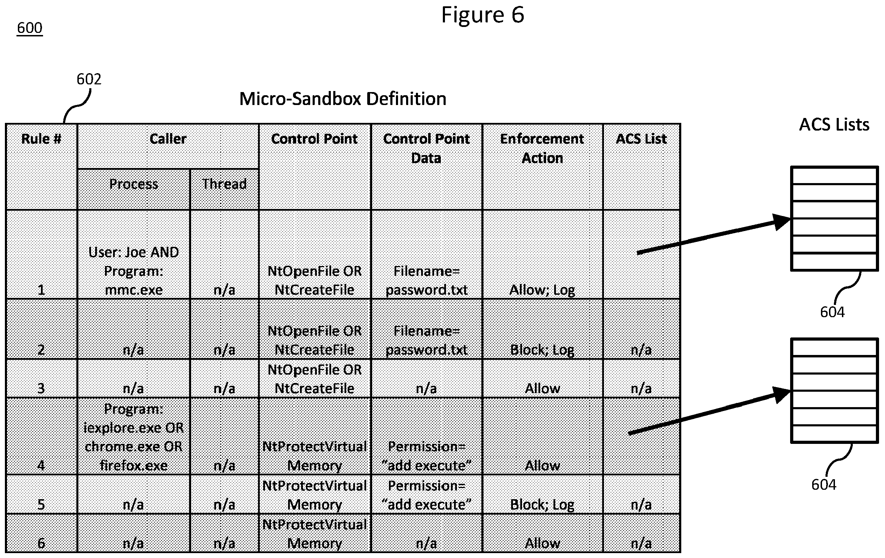

Figure 6 is a conceptual depiction of the data 600 used by the endpoint component to store a micro-sandbox definition 602, according to embodiments. Each row in the micro-sandbox definition 602 represents a single rule in the micro-sandbox. Each column in micro-sandbox definition 602 represents a field in a micro-sandbox rule. Micro-sandbox definition 602 contains a list of various rules - here rules 1-6. The "Rule #" column specifies a reference number for the rule. The columns grouped under the "Caller" heading specify the caller to which the rule applies. The caller specification comprises the Process and Thread columns. The "Process" column specifies the calling process attributes to which this rules applies, the "Thread" column specifies the calling thread ID to which this rule applies. The value "n/a" is a special value that always acts as a match against the caller. The "Control Point" column specifies location at which the endpoint component intercepts execution to which the rule applies, and the "Control Point Data" column specifies one or more pieces of data available at the Control Point that must be present for the rule to apply. The "Enforcement Action" column specifies one or more actions to be taken when the rule is matched. The "ACS List" column contains a pointer to a list of ACSs to which the rule applies. Accordingly, as can be seen, rule 1 has calling process attributes "User: Joe; Program: mmc.exe" (i.e. the calling process must be running with the user identity "Joe" and must be running the program "mmc.exe"), calling thread ID "n/a" (i.e. the calling thread can be any thread), control point "NtOpenFile" or "NtCreateFile" (i.e. the rule applies when execution is intercepted in either of these two functions), control point data "Filename=password.txt" (i.e. rule only applies if the file being opened is named "password.txt"), enforcement actions "Allow; Log", and a pointer to an ACS list 604 for use in this rule.

In embodiments, micro-sandbox rules are sequential and only the first rule that matches applies. The micro-sandbox rules 602 depicted are designed for such an embodiment. Rule numbers 1-3 are designed to protect the "password.txt" file. Rule 1 allows "Joe", when running "mmc.exe" to open the "password.txt" file, but only if the program opens the file using one of the ACSs specified in the rule's ACS list. Rule 2 blocks all other users and all other programs from opening "password.txt" and rule 3 allows all users and programs to open all other files. Similarly, rule numbers 4-6 are designed to control changing non-executable memory into executable memory. Rule 4 allows several browsers to make this kind of change, but only if the change is made using one of the ACSs specified in the rule's ACS list. Rule 5 blocks all other program from changing non-executable memory into executable memory and rule 6 allows any program to change memory permissions in ways that do not change their executable status. In another embodiment, all rules that match apply. In another embodiment, rules are sequential, all rules that match apply, until either all rules have been processed or a matching rule includes a "stop processing" action. Other embodiments can use other techniques or combinations of techniques using full ACSs, per-module ACSs, other control point data, and actions in micro-sandbox rules.

The Action field in a micro-sandbox rule contains one or more enforcement actions that tell the endpoint component what to do when a rule is matched. Enforcement actions include blocking the requested function call or making the call as initiated by the caller, recording the call in the behavioral log, generating an operational alert message and sending it to the management component, recording a message in the endpoint operating system log, displaying an informational message to the user or users logged into the endpoint system, requesting permission for the action from the user or users logged into the endpoint system, executing some action on the endpoint system, e.g., launching an external program. Other enforcement actions are also possible.

Figure 7 is a flowchart depicting a method 700 of matching the caller and intercepted function to micro-sandbox rules, according to various embodiments. For ease of explanation, method 700 will be described with reference to the micro-sandbox rules 602 depicted in Figure 6 and the intercepted function call 800 depicted in Figure 8, however it need not be so limited.

After intercepting a function call, the endpoint component executes step 702, obtaining rule number 1 in the micro-sandbox definition 602. Next it obtains the various portions of the caller information. Step 704 obtains the calling process attributes, as described above. Step 706 obtains the calling thread identification, as described above. Step 708 obtains the calling sequence, as described above and depicted in method 1700 and figure 17. After obtaining all the caller information, the endpoint component begins matching that information against the micro-sandbox rules.

Step 710 compares the calling process attributes against rule 1 in the micro-sandbox. The process 802 has Program: iexplore.exe, which does not match the Process attributes in rule 1. Steps 724 and 726 move to rule 2 in the micro-sandbox 602. Steps 710 and 712 match for rule 2, since the Process and Thread fields of rule to have the special "n/a" value that always matches. Step 714 compares the the current control point "NtProtectVirtualMemory" against the control point field of rule 2 ("NtOpenFile OR NtCreateFile") and there is no match. Steps 724 and 726 move to rule 3 in the micro-sandbox 602. Steps 710, 712, 714, 724 and 726 repeat for rule 3 in the micro-sandbox 602. We pick up the method at Step 710 using rule 4 in the micro-sandbox 602. Step 710 compares the calling process attributes against rule 4. In this case, the calling process 802 is "iexplore.exe", which does match the caller process field of rule 4. Thus the method moves to step 712.

Step 712 sees "n/a" listed in the Thread field of rule 4. "n/a" is a special value that always acts as a match against the caller. Next, step 714 compares the current control point "NtProtectVirtualMemory" against rule 4, and it matches the interception example 800. Next step 716 compares the parameters of the call in the interception example 800 against rule 4. For the purposes of this illustration, we will assume the call was made with parameters that "add execute" to a memory region, so again there is a match. Next, Step 718 compares the calling sequence obtained in Step 708 against the ACS list 604 in rule 4. Again, we will assume that the calling sequence obtained in Step 708 does match one of the ACSs in rule 4's ACS list 604. Finally, since all fields in rule 4 have matched, step 722 returns the action or actions listed in the rule, in this case "Allow". The Allow action tells the endpoint component 804 to let the call to the NtProtectVirtualMemory function proceed.

In one embodiment, all the steps in Figure 7 are implemented in the endpoint component. In another embodiment, steps 702-708 are implemented in the endpoint component and steps 710-728 are implemented in the cloud component. In this case, the endpoint component sends the obtained in steps 702-708 to the cloud component, which then executes steps 710-728 based on that data and finally sends the enforcement action returned by step 722 or step 728 back to the endpoint component. The endpoint component then enforces the action(s) return to it. In another embodiment, steps 702-708 are implemented in the endpoint component and steps 710-728 are implemented in the management component. In another embodiment, steps 702-708 are implemented in a custom external device attached to the computer system containing the endpoint component, and steps 710-728 are implemented in the custom external device. Other embodiments may implement different subsets of the steps in Figure 7 in the endpoint component and in other locations outside the endpoint component.

The use of ACSs in micro-sandbox rules is crucial to providing highly granular protection from malicious software. Traditional sandbox implementations use a variety of data in their control points, but by ignoring the calling sequence that led to the control point, they can only provide a coarse level of control. They can only verify that the module, or in some cases only that the process, invoking the controlled operation is legitimate. Malicious code takes over the stack, changing the normal execution path into the desired malicious path. By only validating the immediate caller of the control point, the sandbox does not see the deviation from the normal execution path. That still leaves the entire module (or process) memory as the attack surface for malicious software. A micro-sandbox can use all the data that a sandbox uses, but by adding ACSs, the micro-sandbox can ensure that the controlled operation is not only permitted for the process or module, but also that it is only permitted for the specific code segments and sequences of code segments within each module as specified by the ACSs in the rules. This eliminates most of the modules in the process, and most of the code in the few permitted modules from the attack surface. Malicious software has to find a way to subvert the small amount of code lying along an ACS in order to create a successful attack. This increases the difficulty of subverting the process to make undesired calls to privileged operations by orders of magnitude.

The longer an ACS is, the higher the confidence that a Return Oriented Programming (ROP) gadget is not making the call. This confidence is based on the principle that functions higher in the calling sequence implement higher level abstractions than functions lower in the calling sequence. The operation being controlled is at the bottom of the calling sequence. As we move up the calling sequence, the calling functions build up abstractions around the controlled operation, making the details of the controlled operation less and less visible or manipulable by higher level functions.

Micro-sandbox rules specify the maximum length of the calling sequence to use when comparing against the ACSs in the rules. The maximum length of the calling sequence can vary over time and for a variety of reasons. In one embodiment, a short maximum length is chosen because the ACSs are based on a small amount of data and a short maximum length reduces false positives. In another embodiment, a long maximum length is chosen because the ACSs are based on a large amount of data and are highly reliable. In another embodiment, the maximum length is short for one module and long for another module, because the per-module ACSs for each module are based on different amounts of data. Other embodiments can use other techniques or combinations of techniques to specify the maximum calling sequence length.

It is also possible to optimize an ACS/control point combination by implementing a new control point at some point on an ACS of an existing control point. As discussed above, the new, higher level control point provides abstraction and insulation around the original, lower level control point. Since the new control point is on an ACS (or possibly multiple ACSs) that lead to the original control point, we are confident that execution won't be hijacked by malicious code between the two control points. Therefore, we can use shorter ACSs for the new control point to replace any of the longer ACSs to the original control point that include the new, higher level control point. The original control point may still have some ACSs in the policy, to account for calls to it that do not pass through the new, higher level control point. And even if no ACSs remain for the original control point, it still needs to remain as a control point to catch any use of the original control point that does not pass through any higher level control point. The ACSs for the new control point, although shorter, are equivalent to the longer ACSs for the original control point that they replaced, and therefore provide the same level of confidence and protection against malicious software that the longer ACSs and original control point provide.

It's also possible that the ACSs for the new control point, in addition to being shorter than the corresponding ACSs to the original control point, are also fewer in number than the corresponding ACSs to the original control point. In this case, managing fewer, shorter ACSs makes the policy more manageable and maintainable over time.

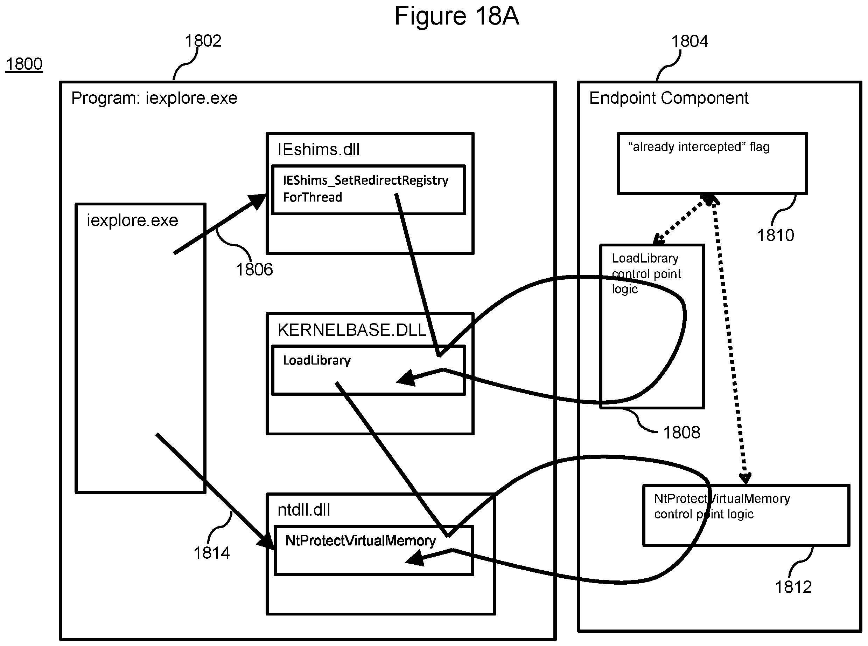

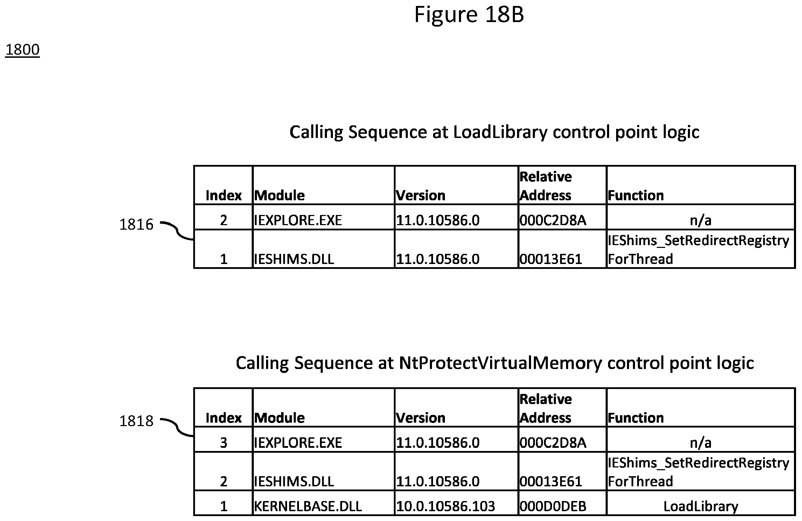

Figures 18A and 18B are a conceptual depiction of function call 1800 that is intercepted at two control points along its calling sequence, according to embodiments. Process 1802 (iexplore.exe) makes a function call 1806 to the IEShims_SetRedirectRegistryForThread function in the IESHIMS.DLL module, which in turn calls LoadLibrary in "KERNELBASE.DLL". The endpoint component 1804 intercepts the LoadLibrary call and executes the LoadLibrary control point logic 1808. Table 1816 shows the calling sequence seen by the LoadLibrary control point logic 1808. It shows that LoadLibrary (the intercepted function) was called by IEShims_SetRedirectRegistryForThread in IESHIMS.DLL which was called by an unknown function in IEXPLORE.EXE. As execution continues, LoadLibrary calls NtProtectVirtualMemory. The endpoint component 1804 now intercepts the NtProtectVirtualMemory call and executes the NtProtectVirtualMemory control point logic 1812. Table 1818 shows the calling sequence seen by the NtProtectVirtualMemory control point logic 1812. It shows that NtProtectVirtualMemory (the intercepted function) was called by LoadLibrary in KERNELBASE.DLL which was called by IEShims_SetRedirectRegistryForThread in IESHIMS.DLL which was called by an unknown function in IEXPLORE.EXE. Note that the calling sequence 1818 seen by the lower control point (the NtProtectVirtualMemory control point logic 1812) is longer than the calling sequence 1816 seen by the higher level control point (the LoadLibrary control point logic 1808). The LoadLibrary control point logic 1808 and the NtProtectVirtualMemory control point logic 1812 both access the shared "already intercepted" flag 1810 as part of their processing.

At another point in time, process 1802 (iexplore.exe) makes a function call 1814 directly to NtProtectVirtualMemory. As before, the endpoint component 1804 now intercepts the NtProtectVirtualMemory call and executes the NtProtectVirtualMemory control point logic 1812. However, in this case, since the call 1814 did not come through LoadLibrary, the LoadLibrary control point logic 1808 is never executed.

The endpoint component can also use combinations of control points to make decisions. One control point stores some data that can be read by other control points in the calling sequence. Subsequent control points can modify their logic based on the data that the previous control point has stored. There are many reasons for passing data between control points. In one embodiment, a higher level control point sets a flag indicating execution has passed through it and a lower level control point simply allows execution to continue with no additional processing when it sees such a flag. In another embodiment, a higher level control point stores one or more of its arguments and a lower level control point compares those arguments with its own to ensure no tampering has occurred in between the two control points. In another embodiment, a lower level control point stores some results from its processing and when execution returns to a higher level control point, it combines the results from the lower level control point with its own to log a more complete record of the calling sequence than either control point could by itself. In another embodiment, the endpoint component implements control points at every level of an ACS in order to build its own view of the calling sequence. Each control point adds to the observed calling sequence in memory. The lowest level control point then compares the calling sequence obtained via one of the methods described above with the observed sequence recorded by the control points. Differences are a sign of potential malicious activity. If no differences are seen, the micro-sandbox then compares the actual calling sequence with the ACSs in the micro-sandbox rules. Other embodiments can use other techniques or combinations of techniques to pass data between two or more control points in a single calling sequence.

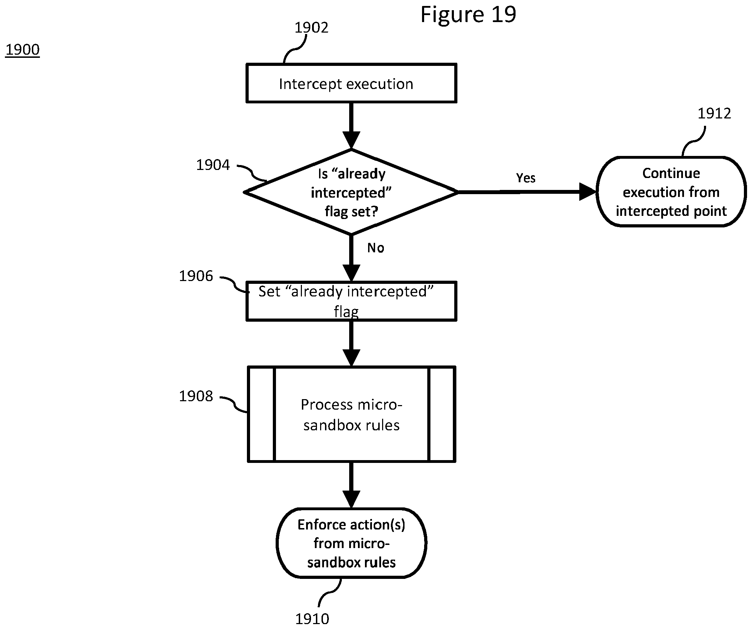

Figure 19 is a flowchart depicting method 1900 of sharing data between two control points in a single calling sequence, according to an example embodiment. For ease of explanation, method 1900 will be described with reference to the intercepted function call example 1800 depicted in Figure 18, however it need not be so limited. In function call 1806 process iexplore.exe 1802 calls IEShims_SetRedirectRegistryForThread in IESHIMS.DLL, which in turn calls LoadLibrary in "KERNELBASE.DLL". At this point the LoadLibrary control point logic 1808 begins executing method 1900 at Step 1902. Step 1904 checks the shared "already intercepted" flag 1810 and sees that it is not set, yet, so it moves to Step 1906 and sets the "already intercepted" flag 1810. Step 1908 then processes the micro-sandbox rules for the LoadLibrary control point and receives a set of actions in return, which it then enforces in Step 1910. For this example, we assume Step 1908 returned the "Allow" action, so Step 1910 allows execution to continue in LoadLibrary at the point where it was intercepted. As execution continues, LoadLibrary calls NtProtectVirtualMemory and the NtProtectVirtualMemory control point logic 1812 begins executing method 1900 at Step 1902. Step 1904 checks the shared "already intercepted" flag 1810 and sees that it is set (having been previously set by the LoadLibrary control point logic 1808 earlier in this calling sequence). Therefore, the method continues at Step 1912 and allows execution to continue in NtProtectVirtualMemory at the point where it was intercepted. The NtProtectVirtualMemory control point logic 1812 never processes any micro-sandbox rules because the shared "already intercepted" flag 1810 indicates that a higher level control point (in this case the LoadLibrary control point logic 1808) has already done so.

Once control points and micro-sandbox rules are created for a module, they can typically be shared as generic control points and rules for all applications using the module. This allows rapid creation of micro-sandboxes for applications that share libraries, once the micro-sandbox has been created for the first such application. Another big advantage of this module by module approach is that since functions within a module are usually performing the same general tasks from one release of the module to the next, the control points generally stay the same from one release of a module to the next. In such cases, the same micro-sandbox rules, with a new set of ACSs, will work correctly from one release to the next of the module.

ACSs for micro-sandbox control points can be defined in a variety of ways. In one embodiment, ACSs are defined using information generated by compilers or other source code or object code pre- or post-processing techniques. In another embodiment, ACSs are defined using information a software designer embeds in source code via extensions to the syntax of existing programming languages. In another embodiment, ACSs are defined by profiling an application's execution behavior. This includes profiling the execution behavior of all modules the application uses. In another embodiment, ACSs are defined using information explicitly or implicitly generated by an operating system. Other embodiments can use other techniques or combinations of techniques to define ACSs associated with control points.

In addition to statically defining ACSs in the micro-sandbox, ACSs can be defined dynamically at the control points. In one embodiment, the micro-sandbox simply define the maximum number of ACSs for a control point and the control point code stores each unique calling sequence it observes as an allowed ACS until the maximum number of ACSs have been stored. Any new calling sequence seen after that point is denied. In another embodiment, the control point categorizes the module at the top of the calling sequence as a one it has never seen (a "new" module), one it has seen (a "known" module) or one whose name it has seen, but with a different version (a "new version" of a module). For new versions of modules, the control point stores the calling sequence as an allowed ACS and permits the call. For new modules, the control point blocks the call. For known modules, the control point only allows the call if the calling sequence matches an ACS stored in the micro-sandbox for this control point. In another embodiment, the control point allows and stores calling sequences from new versions of modules as ACSs for a specified period of time after the module is first seen. After that time passes, the control point only allows the call if the calling sequence matches an ACS already stored. Other embodiments can use other techniques or combinations of techniques to decide when and whether to define ACSs dynamically.

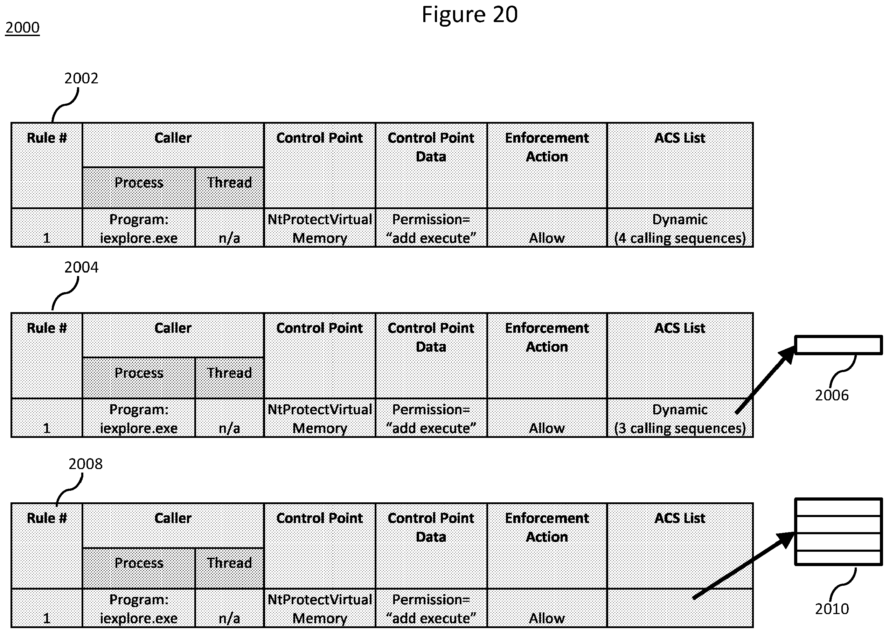

Figure 20 is a conceptual depiction of the data 2000 in a micro-sandbox rule that allows dynamic definition of ACSs, according to embodiments. The columns in the micro-sandbox definitions 2002, 2004, and 2008 are the same and have the same meaning as the columns in the micro-sandbox definition 602. The three micro-sandbox definitions depict the same micro-sandbox rule as it changes over time. The first definition 2002 shows the rule as it appears when a process first starts. The "ACS List" column has a dynamic component "4 calling sequences", indicating the control point code should store the first 4 unique calling sequences it sees into the rule's ACS list. The second definition 2004 shows the rule after 1 ACS has been stored. The "ACS List" column now has a pointer to ACS list 2006 with 1 ACS and its dynamic component has been decremented to "3 calling sequences". The third definition 2008 shows the rule after 4 ACSs have been stored. The "ACS List" column now has a pointer to ACS list 2010 with 4 ACSs and its dynamic component is gone. From this point on, the rule behaves just like a rule that had a statically defined ACS list with 4 ACSs.

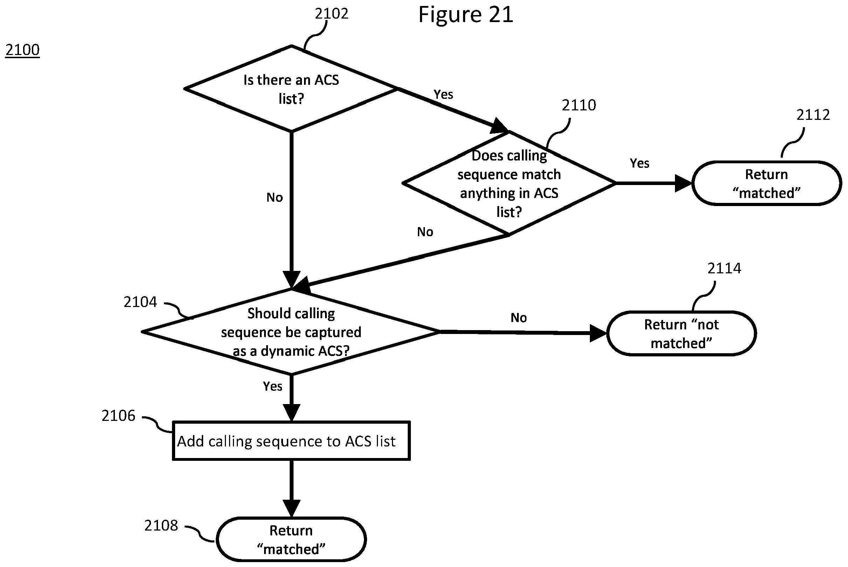

Figure 21 is a flowchart depicting method 2100 of the logic for enforcing a micro-sandbox rule with a dynamic ACS list, according to an example embodiment. For ease of explanation, method 2100 will be described with reference to the micro-sandbox definitions 2000 depicted in Figure 20, however it need not be so limited. The method 2100 begins when rule 1 in micro-sandbox definition 2002 is matched. Step 2102 checks the rule's "ACS List" field for a pointer to an ACS list. There is no pointer, so the method proceeds to Step 2104, which checks the rule's "ACS List" field to see if the current calling sequence should be recorded in the rule's ACS list. Rule 1 in micro-sandbox definition 2002 does have a dynamic component that specifies "4 calling sequences", so Step 2106 creates an ACS list 2006, stores the pointer to the list in rule 1's "ACS list" field and decrements the counter in the dynamic portion of rule 1's "ACS list" field from 4 to 3. At the end of this execution of Step 2106, rule 1 has been modified to the state shown in the second micro-sandbox definition 2004. The method then proceeds to Step 2108 and returns the "matched" result.

Continuing the example, assume rule 1 matched again, from the same calling sequence as before. The method 2100 begins again using rule 1 as it appears in the second micro-sandbox definition 2004. Step 2102 checks the rule's "ACS List" field for a pointer to an ACS list. In this case, there is a pointer, so the method proceeds to Step 2110, which compares the current calling sequence against the entries in the ACS List 2006. As noted above, the current calling sequence is the same as the ACS recorded in the first pass through the method 2100, so Step 2110 does find a match and continues to Step 2112 and returns the "matched" result. Rule 1 remains in the same state at the end of this pass through method 2100 as it was at the beginning - the state shown in the second micro-sandbox definition 2004.

Additional passes through method 2100 for rule 1 add more entries to the rule's ACS list and decrement the rule's dynamic component until the ACS list contains 4 ACSs and the dynamic component reaches 0 and is removed. At that point, rule 1 rule 1 has been modified to the state shown in the third micro-sandbox definition 2008, with the "ACS List" field containing a pointer to an ACS list 2010 with 4 entries and no longer containing a dynamic component.

### Using Micro-sandboxes to contain/eliminate memory-based programming errors

There have been no general-purpose effective methods to deal with programming errors when it comes to using memory in an application. This has led to a class of day-0 attacks that have been extremely difficult or impossible to deal with. These attacks are, by far, the most widespread ones out there.

In general, the attack sequence is as follows. A programming error in an application allows the attacker to store arbitrary data either on the stack or in the heap of the application. Once an attacker can load its own data in these areas, it can then use well-known stack-based or heap-based attack techniques to take control of the application.

Modern operating systems include features that make it more difficult for unwanted operations to be performed by a program in an attempt to reduce the chance of an attacker effectively using a programming error. These include:
- Using the Data Execution Prevention (DEP) CPU feature that only executes code from a segments in a program's memory that have an execute permission set on them. Thus, the CPU will not execute code stored in ordinary data segments.
- Preventing a program from turning off DEP.
- Making a program's stack area non-executable.
- Randomizing where executable and data portions of a program are stored in a process' address space.

In practice, however, sophisticated attacks can bypass any or all of the above restrictions.

In a successful attack (in this case due to memory programming errors), the attacker takes control of either the stack or a portion of the heap space of the program. At that point, the attacker can use well-known Return Oriented Programming (ROP) techniques using the available ROP gadgets in the application to take over the application's functionality. ROP gadgets are any part of the executable instructions loaded in an application that end with a processor's return (RET) instruction. Chained together, these ROP gadgets allow an attacker to perform arbitrary operations on a machine. In theory, given a sufficiently large quantity of code, sufficient gadgets exist to perform any operation that an attacker wants. Most applications do have huge amounts of library code loaded under normal circumstances and therefore do contain more than enough ROP gadgets for attackers to implement very sophisticated attack logic.

In reality, most, if not all, attackers use ROP gadgets to inject a large amount of their own malicious code into an application and then execute this injected code to take total control of the application's process. At that point, the attacker has access to the entire universe of the features, privileges, data, etc. to which that original application had access.

A micro-sandbox can be created to deal with the above issues in a simple and effective way. This micro-sandbox has are two goals:
1) Stop injection of new code into a program.
2) Limit the number of ROP gadgets available to an attacker.

### Stop injection of new "attack" code into a program

Most programs only load new code through the well-known operating system interfaces that load modules from disk files, e.g. program files or shared library files. In Windows, these interfaces are LoadLibrary and LoadLibraryEx. In Linux, these interfaces are dlopen or dlmopen. All other modern operating systems have equivalent concepts and interfaces.

For this class of programs the following micro-sandbox definition stops injection of new code:
- Allow ACSs that pass through the well-known operating system interfaces that load modules from disk files to create new executable memory segments.
- Block all other attempts to create executable memory segments.

Figures 18A and 18B are a conceptual depiction of function call 1800 that is intercepted at two control points along its calling sequence, according to embodiments. We now use these figures to illustrate the operation of the micro-sandbox definition described above. Windows provides the well-known LoadLibrary function to load modules from disk files to create new executable memory segments. Windows also provides the well-known NtProtectVirtualMemory function to change the protection settings on a memory segment. This includes the ability to change a non-executable memory segment into an executable memory segment. In function call 1806 process iexplore.exe 1802 calls IEShims_SetRedirectRegistryForThread, which calls LoadLibrary. LoadLibrary in turn calls NtProtectVirtualMemory to make the memory containing the newly loaded disk file executable. Based on the first rule in the micro-sandbox definition from above, the LoadLibrary control point logic 1808 allows all calls to succeed, since this is a well-known operating system interface on Windows for creating new executable memory segments. As the execution of function call 1806 proceeds with LoadLibrary calling NtProtectVirtualMemory, the NtProtectVirtualMemory control point logic 1808, using method 1900 from figure 19 or some alternate method, allows all calls to NtProtectVirtualMemory coming through LoadLibrary to succeed because the LoadLibrary control point logic 1808 has set the shared "already intercepted" flag 1810.

In contrast, in function call 1814, process iexplore.exe 1802 calls NtProtectVirtualMemory directly, without going through LoadLibrary, and attempts to change a non-executable memory segment into an executable memory segment. The NtProtectVirtualMemory control point logic 1808, using method 1900 from figure 19 or some alternate method, blocks function call 1814 based on the second rule in the micro-sandbox definition from above. In this case, the shared "already intercepted" flag 1810 has not been set by the LoadLibrary control point logic 1808 because the call to NtProtectVirtualMemory did not come through LoadLibrary.

There are a handful of programs, and only a handful of modules within those programs, that generate code segments dynamically based on externally loaded input, i.e. not by loading disk files through the normal operating system module loading interfaces. These include:
- Browsers, e.g. Internet Explorer, Chrome, FireFox, Safari, etc.
- Plug-ins or external programs doing work on behalf of a browser or by themselves, e.g. Oracle JAVA, Adobe Flash, Adobe PDF, etc.

For this class of programs the following micro-sandbox definition stops injection of new code:
- Allow ACSs that pass through the well-known operating system interfaces that load modules from disk files to create new executable memory segments.
- Allow additional ACSs specified in the micro-sandbox to create new executable memory segments. These additional ACSs define the legitimate calling sequences that generate code segments dynamically.
- Block all other attempts to create executable memory segments.

The class that a program belongs to is determined in advance by profiling the application or other techniques.

### Limit the number of ROP gadgets available to an attacker

ROP gadgets can be used to perform operations by an attacker without directly injecting new code into a program. A micro-sandbox provides better protection against use of ROP gadgets by knowing the code segments that a program uses under normal conditions. Knowledge of the code segments a program normally uses can be obtained using a variety of techniques. In one embodiment, the set of code segments is defined using information generated by compilers or other source code or object code pre- or post-processing techniques. In another embodiment, the set of code segments is defined by profiling an application's execution behavior. This includes profiling the execution behavior of all modules the application uses. In another embodiment, the set of code segments is defined using information explicitly or implicitly generated by an operating system. Other embodiments can use other techniques or combinations of techniques to define the set of code segments used by a program.

A micro-sandbox can control what executable code, and therefore what ROP gadgets, are available in a program. As described above, all modern operating systems have well-known system interfaces that load modules from disk files. These interfaces are the control points for the micro-sandbox:
- Only allow modules explicitly specified in the micro-sandbox to be loaded. This gives coarse-grained control by blocking attempts to load entire modules that the program doesn't use.
- When loading a module, only allow explicitly specified functions within the module to be available to the program. This gives fine-grained control by eliminating portions of a module that the program doesn't use. For large utility libraries, this can eliminate most of the code in the library. In one embodiment, the module loading interface zeroes out the part of the modules memory space that is not used by the program before it returns control back to the program. Other embodiments can use other techniques or combinations of techniques to block use of portions of a module by a program.

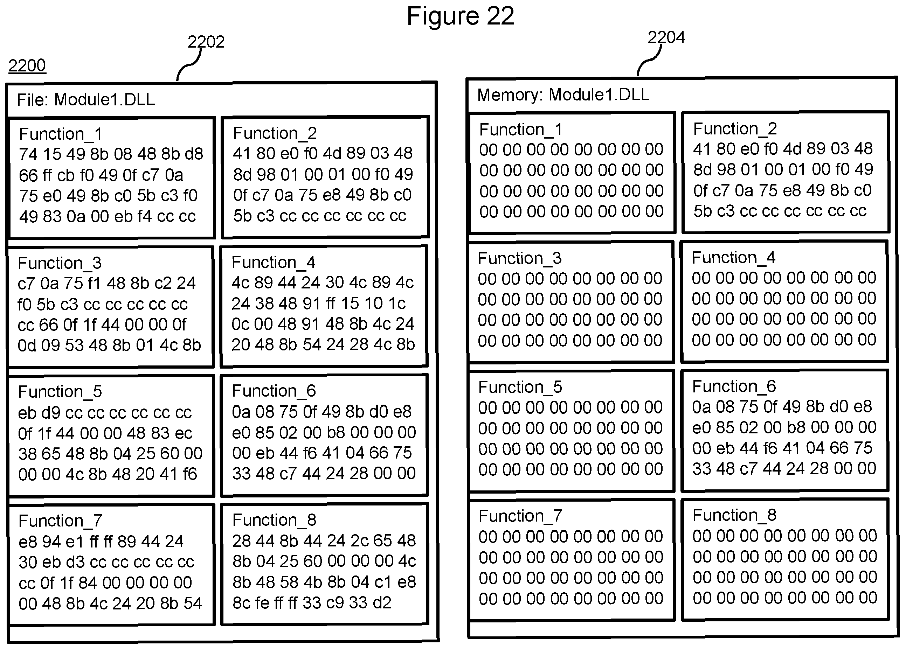

Figure 22 is a conceptual depiction of a module 2200 as it appears on disk and in memory after being modified according to the second micro-sandbox definition above, according to embodiments to reduce its attack surface. The disk image of Modulel.DLL 2202 shows that the module has 8 functions, each containing binary instruction data. Let us assume that analysis has shown that in a particular program loads Modulel.DLL but only uses Function_2 and Function_6 from this module. This information is included in the micro-sandbox definition for the program. When the program loads Modulel.DLL, the first micro-sandbox rule above allows the Modulel.DLL to be loaded, because the micro-sandbox rules include Modulel.DLL in the list of allowed modules. But the second micro-sandbox rule causes the control point logic to zero out any function not used by the program. Thus, the memory image of Modulel.DLL 2204 shows that only Function_2 and Function_6 still have their original binary instruction data. All the other functions contain zeroes. Any attempt to execute code inside those functions will fail. In particular, if malicious code attempts to use part of any of those functions as a ROP gadget, it will fail. In this particular case, the attack surface of Modulel.DLL in this program has been reduced from 8 functions to 2.

### Custom JAVA Micro-sandbox

The JAVA virtual machine has a built-in security manager designed to create a sandbox around each JAVA program running in the virtual machine. However, attackers have discovered ways to disable the security manager entirely or to modify security manager data structures to remove all restrictions on their malicious code.

The following micro-sandbox rules can counter these attack vectors:
- Create control points in the JAVA virtual machine functions that disable the security manager or change security manager settings. Only allow these functions when they are called via approved ACSs.
- Create control points in the JAVA virtual machine functions that allocate the security manager data structures. Monitor all security manager data structures for changes. Only allow changes to the data made via approved ACSs.

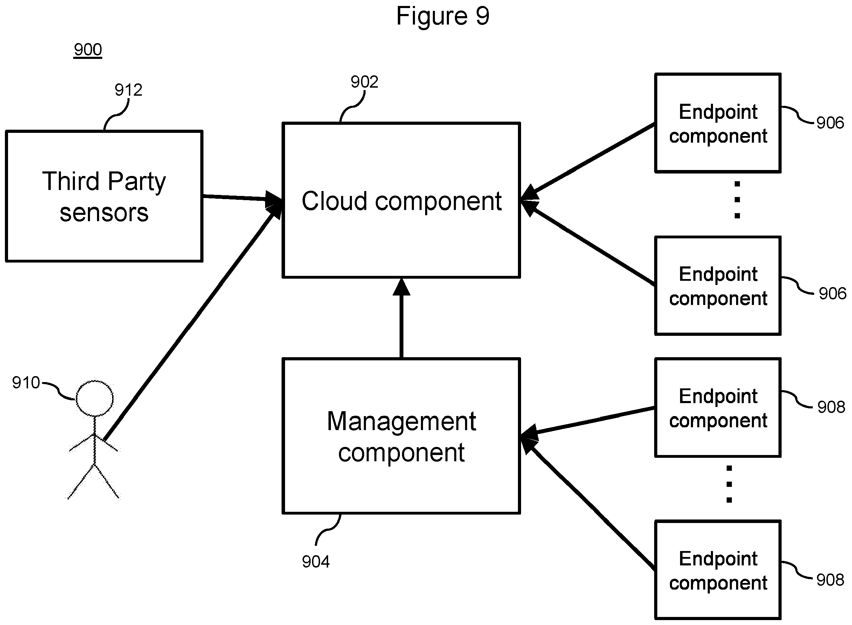

Figure 9 is a block diagram of a system 900 that includes a single public cloud component 902 gathering data from all sources, according to an example embodiment. The system 900 includes a cloud component 902, a management component 904, endpoint components 906 that are coupled to the cloud component 902, and endpoint components 908 that are coupled to the management component 904. According to various embodiments, the cloud component 902, the management component 904, and the endpoint components 906 and 908 can be implemented similarly to the corresponding components depicted and described with reference to figure 1, above. As shown in figure 9, the public cloud component 902 receives data directly from some endpoint components 906, indirectly from other endpoint components 908 via a management component 904, as well as from third party sensors 912 and from direct input by one or more persons 910. The public cloud component 902 accepts behavioral data from third party sensors 912 or persons 910 in order to broaden the sources of behavioral data used to create ACSs and micro-sandbox definitions.

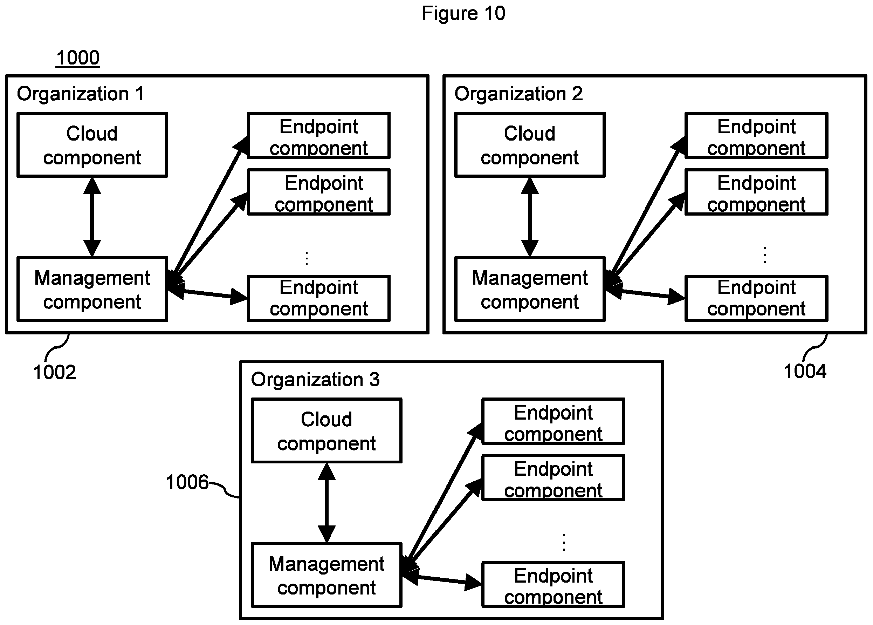

In another embodiment, there are one or more private clouds, each gathering data from a specific organization's sources, keeping each organization's data separate. Figure 10 is a block diagram of a system 1000 that includes 3 separate private clouds, according to an example embodiment. As shown, each of the clouds 1002, 1004, and 1006 includes its own corresponding cloud component, management component, and endpoint components.

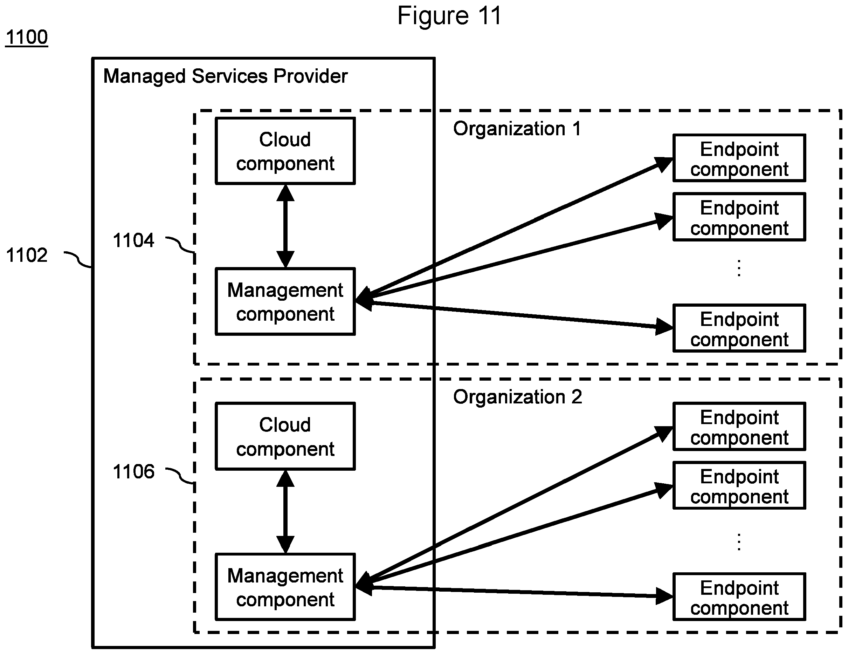

In another embodiment, the management components and the cloud component or just the cloud component for an organization are operated by an external organization, known as a managed services provider. This relieves the organization of some of the operational burden required by the system. Figure 11 is a block diagram of a managed service system 1100 where the managed services provider 1102 operates cloud and management components for two separate organizations 1104 and 1106, according to an embodiment. In other embodiments the managed services provider 1102 may operate any combination of components for one organization and operate a different combination of components for another organization.

Other embodiments may use combinations of one or more public clouds and one or more private clouds, each gathering data from a subset of possible data sources.

In addition to producing sandbox or micro-sandbox definitions, the cloud component can take additional security actions in the customer's environment based on specific data it receives.

An important part of the endpoint component 200 is the reference monitor 204. Protecting the reference monitor 204 is an essential part of the usefulness of a system. The endpoint component 200 uses appropriate mechanisms to protect the reference monitor 204 based on the reference monitor implementation.

In one embodiment, the reference monitor 204 resides entirely in the address space of the process being protected, e.g., the reference monitor 204 is a module loaded into the process being protected. In this case, the endpoint component 200 protects both the reference monitor 204 code and enforcement data (for example the user level stack) from all other code running inside of the process and from all code running in all other processes in the system. The reference monitor 204 itself implements the protection mechanism using the various well-known techniques in the literature like guard pages, periodic snapshots of the enforcement data, asynchronous mechanisms to make sure the loaded reference monitor 204 has not been tampered with, etc.

In another embodiment, the reference monitor 204 resides entirely in the operating system's address space (for example as some sort of module in the kernel). Since the reference monitor 204 resides in the operating system's address space it is therefore protected in the same way as the operating system is protected.

In another embodiment, the reference monitor 204 resides entirely in the address space of a separate user level or kernel level process. The process containing the reference monitor 204 protects itself from all code running in other processes in the system using the various operating system mechanisms.

In another embodiment, portions of the reference monitor 204 reside in two or more of the previously discussed locations. For example, the reference monitor 204 may reside partially in the address space of the process being protected and partially in the address space of a separate monitor process. The reference monitor 204 protects itself using the necessary combinations of the previously discussed techniques.

Other embodiments are possible, using different reference monitor 204 implementations that protect themselves using techniques appropriate for their implementation.

The Micro-sandbox concept applies to all operating systems including mobile ones. Accordingly, the endpoint component 200 may be implemented on any operating system and may be implemented by the OS vendor or third party(ies). It may be implemented to intercept operating system function calls or function calls in an application. In one embodiment, the endpoint component 200 is implemented to intercept operating system calls on Microsoft Windows 32-bit operating systems. The implementation can be done entirely in the kernel (since all operating system calls can be intercepted), outside of the kernel in user mode, or a combination of both. In another embodiment, the endpoint component 200 is implemented to intercept operating system calls on Microsoft Windows 64-bit variants, on Linux variants (Red Hat, SUSE, Ubuntu, Fedora, Mint, Debian, CentOS, Mageia, Mandriva, Arch, Slackware, Puppy, etc.), on UNIX variants (Solaris, HP-UX, AIX, BSD variants, etc.), or on Mainframe variants (IBM, etc.). The OS vendor or others with access to the OS source code can implement the endpoint component 200 inside of the kernel. Third parties, depending on the richness of the controls implemented in the micro-sandbox may be able to use a kernel implementation entirely. However, if a very rich set of micro-sandbox control functions are desired the implementation may need user level code as well. In another embodiment, the endpoint component 200 is implemented to intercept operating system calls on SE Linux variants (Red Hat, SUSE, Ubuntu, Fedora, Mint, Debian, CentOS, Mageia, Mandriva, Arch, Slackware, Puppy, etc.). The implementation can be done as an extension of SE Linux security features or as an entirely new concept. The OS vendor or others with access to the OS source code can implement the endpoint component 200 inside of the kernel. Third parties, depending on the richness of the controls implemented in the micro-sandbox may be able to use a kernel implementation entirely. However, if a very rich set of micro-sandbox control functions are desired the implementation may have to have user level code as well. In another embodiment, the endpoint component 200 is implemented to intercept operating system calls on OS X variants, iOS variants, or Android variants. Although all of these operating systems are derived from UNIX/Linux, they have more stringent controls and often more limited APIs than UNIX or Linux. The OS vendor or others with access to the OS source code can implement the endpoint component 200 inside of the kernel. In another embodiment, the endpoint component 200 is implemented to intercept application function calls in a database application. Depending on the APIs offered by the database application, the database vendor or third-parties may implement the endpoint component inside or outside of the database application's address space. Other embodiments may implement the endpoint component 200 to implement any operating system or application function calls for any combination of applications or operating systems. Depending on the published APIs, third party implementations, their location, and their limitations, the endpoint component 200 implementation will vary greatly depending on the operating system.

Various embodiments can be implemented, for example, using one or more well-known computer systems, such as computer system 2300 shown in FIG. 23. Computer system 2300 can be any well-known computer capable of performing the functions described herein.

Computer system 2300 includes one or more processors (also called central processing units, or CPUs), such as a processor 2304. Processor 2304 is connected to a communication infrastructure or bus 2306.

One or more processors 2304 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 2300 also includes user input/output device(s) 2303, such as monitors, keyboards, pointing devices, etc., that communicate with communication infrastructure 2306 through user input/output interface(s) 2302.

Computer system 2300 also includes a main or primary memory 2308, such as random access memory (RAM). Main memory 2308 may include one or more levels of cache. Main memory 2308 has stored therein control logic (i.e., computer software) and/or data.

Computer system 2300 may also include one or more secondary storage devices or memory 2310. Secondary memory 2310 may include, for example, a hard disk drive 2312 and/or a removable storage device or drive 2314. Removable storage drive 2314 may be a floppy disk drive, a magnetic tape drive, a compact disk drive, an optical storage device, tape backup device, and/or any other storage device/drive.

Removable storage drive 2314 may interact with a removable storage unit 2318. Removable storage unit 2318 includes a computer usable or readable storage device having stored thereon computer software (control logic) and/or data. Removable storage unit 2318 may be a floppy disk, magnetic tape, compact disk, DVD, optical storage disk, and/ any other computer data storage device. Removable storage drive 2314 reads from and/or writes to removable storage unit 2318 in a well-known manner.

According to an exemplary embodiment, secondary memory 2310 may include other means, instrumentalities or other approaches for allowing computer programs and/or other instructions and/or data to be accessed by computer system 2300. Such means, instrumentalities or other approaches may include, for example, a removable storage unit 2322 and an interface 2320. Examples of the removable storage unit 2322 and the interface 2320 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 2300 may further include a communication or network interface 2324. Communication interface 2324 enables computer system 2300 to communicate and interact with any combination of remote devices, remote networks, remote entities, etc. (individually and collectively referenced by reference number 2328). For example, communication interface 2324 may allow computer system 2300 to communicate with remote devices 2328 over communications path 2326, which may be wired and/or wireless, and which may include any combination of LANs, WANs, the Internet, etc. Control logic and/or data may be transmitted to and from computer system 2300 via communication path 2326.

In an embodiment, a tangible apparatus or article of manufacture comprising a tangible computer useable or readable medium having control logic (software) stored thereon is also referred to herein as a computer program product or program storage device. This includes, but is not limited to, computer system 2300, main memory 2308, secondary memory 2310, and removable storage units 2318 and 2322, as well as tangible articles of manufacture embodying any combination of the foregoing. Such control logic, when executed by one or more data processing devices (such as computer system 2300), causes such data processing devices to operate as described herein.

Based on the teachings contained in this disclosure, it will be apparent to persons skilled in the relevant art(s) how to make and use embodiments of the invention using data processing devices, computer systems and/or computer architectures other than that shown in FIG. 23. In particular, embodiments may operate with software, hardware, and/or operating system implementations other than those described herein.

It is to be appreciated that the Detailed Description section, and not the Summary and Abstract sections (if any), is intended to be used to interpret the claims. The Summary and Abstract sections (if any) may set forth one or more but not all exemplary embodiments of the invention as contemplated by the inventor(s), and thus, are not intended to limit the invention or the appended claims in any way.

While the invention has been described herein with reference to exemplary embodiments for exemplary fields and applications, it should be understood that the invention is not limited thereto. Other embodiments and modifications thereto are possible, and are within the scope and spirit of the invention. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments may perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the invention should not be limited by any of the above-described exemplary embodiments, but should be defined only in accordance with the following claims and their equivalents.

Alternative statements of the invention are recited below as numbered clauses:
1. A method of mapping an address to a memory region in a process, comprising:
   receiving an address to be mapped;
   determining that a module corresponding to the address to be mapped is present in a module list;
   converting the address to be mapped to a relative address within the identified module; and
   returning mapping information for the address to be mapped.
2. The method of clause 1, wherein the mapping information for the address to be mapped comprises at least one of: a module name, a module version number, a function name, the relative address, and an assured calling sequence value.
3. The method of clause 1, wherein determining that the module corresponding to the address is present in the module list comprises comparing the address to be mapped to begin and end addresses of a module in the module list.
4. The method of clause of clause 3, wherein the address to be mapped is compared to begin and end addresses of a plurality of modules in the module list according to the index values of each of the plurality of modules.
5. The method of clause 1, further comprising:
   determining that the identified module has an associated function list.
6. The method of clause 5, wherein the associated function list has a plurality of functions.
7. The method of clause 6, further comprising:
   determining which function of the plurality of functions in the function list corresponds to the address to be mapped.
8. The method of clause 7, wherein determining which of the plurality of functions comprises:
   comparing the address to be mapped to begin and end addresses associated with each of the plurality of functions.
9. The method of clause 7, wherein determining which function of the plurality of functions corresponds to the address to be mapped comprises:
   determining that the address to be mapped falls between a begin and an end address associated with a function.
10. The method of clause 1, wherein the address to be mapped is based on a calling sequence associated with known memory regions of the process.
11. A memory mapping system, comprising:
   a memory; and
   one or more processors coupled to the memory and configured to:
      receive an address to be mapped;
      determine that a module corresponding to the address to be mapped is present in a module list;
      convert the address to be mapped to a relative address within the identified module; and
      return mapping information for the address to be mapped.
12. The system of clause 11, wherein the mapping information for the address to be mapped comprises at least one of: a module name, a module version number, a function name, the relative address, and an assured calling sequence value.
13. The system of clause 11, wherein the one or more processors are configured to determine that the module corresponding to the address is present in the module list by comparing the address to be mapped to begin and end addresses of a module in the module list.
14. The system of clause of clause 13, wherein the one or more processors are configured to compare the address to be mapped to begin and end addresses of a plurality of modules in the module list according to the index values of each of the plurality of modules.
15. The system of clause 11, wherein the one or more processors are further configured to:
   determine that the identified module has an associated function list.
16. The system of clause 15, wherein the associated function list has a plurality of functions.
17. The system of clause 16, wherein the one or more processors are further configured to:
   determine which function of the plurality of functions in the function list corresponds to the address to be mapped.
18. The system of clause 17, wherein the one or more processors are configured to determine determining which function of the plurality of functions corresponds to the address to be mapped by determining that the address to be mapped falls between a begin and an end address associated with a function.
19. The system of clause 11, wherein the one or more processors are configured to base the address to be mapped on a calling sequence associated with known memory regions of the process.
20. A non-transitory computer-readable medium storing computer executable code that, when executed by one or more processors, causes the one or more processors to perform processes comprising:
   receiving an address to be mapped;
   determining that a module corresponding to the address to be mapped is present in a module list;
   converting the address to be mapped to a relative address within the identified module; and
   returning mapping information for the address to be mapped.

## Claims

1. A method of validating application behavior, comprising:
intercepting a function call;
obtaining a calling sequence associated with the function call, wherein the calling sequence comprises the actual sequence of program locations causing the invocation of the function call;
determining whether the obtained calling sequence matches at least a portion of an assured calling sequence (ACS), wherein the portion of the ACS comprises an approved sequence of program locations causing the invocation of the function call; and
blocking the function call upon the determination that the obtained calling sequence does not match a portion of any ACS.

2. The method of claim 1, wherein the obtained calling sequence comprises one or more addresses.

3. The method of claim 2, wherein determining that the obtained calling sequence matches at least a portion of the ACS comprises:
determining that each address in the obtained calling sequence exactly matches a corresponding entry in the ACS.

4. The method of claim 2, wherein determining that the obtained calling sequence matches at least a portion of the ACS comprises:
determining that address in the obtained calling sequence falls within a range of addresses associated with the function call in the ACS.

5. The method of claim of claim 2, wherein determining that the obtained calling sequence matches at least a portion of the ACS comprises:
comparing each address in the obtained calling sequence to begin and end addresses of a plurality of modules in the ACS.

6. The method of claim 2, wherein the one or more addresses comprise relative addresses.

7. The method of claim 1, further comprising:
determining that an address in the obtained calling sequence maps to a module that has an associated function list.

8. The method of claim 7, wherein the associated function list has a plurality of functions.

9. The method of claim 8, further comprising:
determining that a function in the plurality of functions in the function list corresponds to an entry in the ACS.

10. The method of claim 1, wherein obtaining the calling sequence comprises calling an operating system function.

11. The method of claim 1, wherein obtaining the calling sequence comprises examining data in a stack of a calling thread.

12. The method of claim 1, wherein obtaining the calling sequence comprises generating a converted calling sequence from an original calling sequence.

13. The method of claim 1, wherein the ACS corresponds to only a subset of lines of code associated with the function call, wherein a remainder of the lines of the code are not associated with the ACS.

14. The method of claim 1, further comprising one or more additional functions calls not associated the ACS.

15. The method of claim 1, wherein the ACS comprises a list of one or more modules, module versions, and relative offsets in the modules.

16. A system, comprising:
a memory; and
at least one processor coupled to the memory and configured to perform operations comprising:
intercepting a function call;
obtaining a calling sequence associated with the function call, wherein the calling sequence comprises the actual sequence of program locations causing the invocation of the function call;
determining whether the obtained calling sequence matches at least a portion of an assured calling sequence (ACS), wherein the portion of the ACS comprises an approved sequence of program locations causing the invocation of the function call; and
blocking the function call upon the determination that the obtained calling sequence does not match a portion of any ACS.

17. The system of claim 16, wherein the obtained calling sequence comprises one or more addresses.

18. The system of claim 17, wherein determining that the obtained calling sequence matches at least a portion of the ACS comprises:
determining that each address in the obtained calling sequence exactly matches a corresponding entry in the ACS.

19. The system of claim 17, wherein determining that the obtained calling sequence matches at least a portion of the ACS comprises:
determining that address in the obtained calling sequence falls within a range of addresses associated with the function call in the ACS.

20. The system of claim 17, wherein determining that the obtained calling sequence matches at least a portion of the ACS comprises:
comparing each address in the obtained calling sequence to begin and end addresses of a plurality of modules in the ACS.

21. A non-transitory computer-readable medium having computer-executable instructions stored thereon that, when executed by a computing device, cause the computing device to perform a method of validating application behavior, the method comprising:
intercepting a function call;
obtaining a calling sequence associated with the function call, wherein the calling sequence comprises the actual sequence of program locations causing the invocation of the function call;
determining whether the obtained calling sequence matches at least a portion of an assured calling sequence (ACS), wherein the portion of the ACS comprises an approved sequence of program locations causing the invocation of the function call; and
blocking the function call upon the determination that the obtained calling sequence does not match a portion of any ACS.
